# EUROPEAN PATENT SPECIFICATION

(11) **EP 4 507 891 B1**
(45) Date of publication and mention of the grant of the patent: **26.08.2026**
(21) Application number: 23721168.5
(22) Date of filing: 10.04.2023
(51) Int. Cl.: B32B 7/12, B32B 15/08, B32B 15/085, B32B 15/09, B32B 15/20, B32B 27/08, B32B 27/32, B32B 27/36, B32B 37/00, B32B 7/02

(54) **ALUMINUM ALLOY PRODUCTS WITH HOT-MELT LAMINATION COATINGS FOR ELECTRICAL INSULATION**
ALUMINIUMLEGIERUNGSPRODUKTE MIT HEISSSCHMELZLAMINIERUNGSBESCHICHTUNGEN ZUR ELEKTRISCHEN ISOLIERUNG
PRODUITS EN ALLIAGE D'ALUMINIUM AVEC REVÊTEMENTS PAR STRATIFICATION THERMOFUSIBLES POUR ISOLATION ÉLECTRIQUE

(30) Priority: 13.04.2022 US 202263362937 P
(43) Date of publication of application: 19.02.2025
(73) Proprietor: Novelis Inc., Atlanta, GA 30326 (US)
(72) Inventor: TUSSING, Christian, Kennesaw, Georgia 30144 (US)
(74) Representative: Weickmann & Weickmann PartmbB
(86) International application number: PCT/US2023/018051
(87) International publication number: WO 2023/200721

(56) References cited:
- US-A1- 2020 259 222
- US-A1- 2022 080 714

## Description

### REFERENCE TO RELATED APPLICATION

This application claims the benefit of and priority to U.S. Provisional Patent Application No. 63/362,937, filed on April 13, 2022, and entitled ALUMINUM ALLOY PRODUCTS WITH HOT-MELT LAMINATION COATINGS FOR ELECTRICAL INSULATION.

### FIELD

The present disclosure relates to metallurgy generally and more specifically to electrically insulated aluminum alloy products.

### BACKGROUND

Metal products are routinely used as structural enclosures for all kinds of products, devices, and systems. Steel enclosures are commonly used for applications requiring high-strength, and aluminum enclosures are also used for some applications.
US 2020/0259222 A1 relates to relates to a secondary battery which includes a sheathing made of a material having an increased thermal conductivity and can thus have an improved safety. As an example, disclosed is a secondary battery comprising: an electrode assembly; and a sheath material which receives the electrode assembly and comprises a metal layer and a non-metal layer formed on the surface of the metal layer, wherein the thickness of the metal layer occupies 50% to 70% of the total thickness of the sheath material.
US 2022/0080714 A1 relates to a composite film for a cable wrapping layer and a preparation method for the same. The composite film for the cable wrapping layer includes a PE film layer, a PET film layer laminated at the PE film layer, an aluminum foil layer laminated at the PET film layer, and a bonding layer arranged between the PET film layer and the aluminum foil layer. The PE film layer is made of raw materials having the following parts by weight: 40-45 parts of LLDPE with a melt index of 0.9-1.1 g/10 min and a density of 0.920-0.922 g/cm³, 35-40 parts of m-LLDPE with a melt index of 1.9-2.1 g/10 min and a density of 0.917-0.920 g/cm³ and 15-25 parts of ethylene-vinyl acetate copolymer.

### SUMMARY

The term embodiment and like terms are intended to refer broadly to all of the subject matter of this disclosure and the claims below. Statements containing these terms should be understood not to limit the subject matter described herein or to limit the meaning or scope of the claims below. Embodiments of the present disclosure covered herein are defined by the claims below, not this summary. This summary is a high-level overview of various aspects of the disclosure and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this disclosure, any or all drawings and each claim.

Aluminum is considerably less dense than steel but can provide high strength characteristics and is useful for many applications. Using aluminum for structural components, such as for electronic device enclosures, then, can provide high strength at reduced weight compared to steel. Like steel, aluminum is a conductive material, and so use of such materials as enclosures for electronic devices can benefit from electrical insulation between the electronic device and the enclosure, such as to reduce the risk of short-circuiting or other undesirable effects.

The present disclosure describes aluminum substrates with multilayer polymeric insulation structures bonded on their surfaces. In some examples, the multilayer polymeric insulation structure can be or comprise polymer films with an adhesive layer thereon and disposed on an aluminum substrate. In some examples, the multilayer polymeric insulation structure can be or comprise a polymer film and an adhesive layer joining polymer film to an aluminum substrate. In such examples, a polymer film can be attached to an aluminum substrate using an adhesive layer between them. In other examples, the multilayer polymeric insulation structure can be or comprise a polymer multilayer film disposed directly on an aluminum substrate and joined thereto using a hot-melt lamination process, for example, such as a process in which a lower melting temperature polymer layer of the polymer multilayer film is heated near, to, or above its melting temperature to allow for intimate contact between the lower melting temperature polymer layer and the aluminum substrate. Using these techniques, the multilayer polymeric insulation structure can be attached to the aluminum substrate as a composite structure and provide an insulating character to the composite structure.

The present disclosure provides an electrically insulated metal product comprising an aluminum alloy sheet metal substrate; and a multilayer polymeric insulation structure bonded to the aluminum alloy sheet metal substrate. The multilayer polymeric insulation structure comprises a joining layer adjacent to the aluminum alloy sheet metal substrate and a top polymer layer over the joining layer. The multilayer polymeric insulation structure has a thickness of from 5 µm to 100 µm. The multilayer polymeric insulation structure bonded to the aluminum alloy sheet metal substrate together exhibit one or more of a surface resistance of from 1 x 10¹² Ω to 1 x 10¹⁵ Ω, a volume resistance of from 1 x 10¹² Ω to 1 x 10¹⁵ Ω, a breakdown voltage of from 2 kV to 50 kV, or a comparative tracking index value of from 175 V to 400 V.

The present disclosure provides methods for preparing an electrically insulated metal product. The method comprises pre-heating an aluminum alloy sheet metal substrate to a first temperature of from 150 °C to 250 °C; and bonding a multilayer polymeric insulation structure to a surface of the aluminum alloy sheet metal substrate to produce a bonded product, the multilayer polymeric insulation structure comprising a joining layer and a top polymer layer over the joining layer. The multilayer polymeric insulation structure has a thickness of from 5 µm to 100 µm, such as from 5 µm to 10 µm, from 10 µm to 15 µm, from 15 µm to 20 µm, from 20 µm to 25 µm, from 25 µm to 30 µm, from 30 µm to 35 µm, from 35 µm to 40 µm, from 40 µm to 45 µm, from 45 µm to 50 µm, from 50 µm to 55 µm, from 55 µm to 60 µm, from 60 µm to 65 µm, from 65 µm to 70 µm, from 70 µm to 75 µm, from 75 µm to 80 µm, from 80 µm to 85 µm, from 85 µm to 90 µm, from 90 µm to 95 µm, or from 95 µm to 100 µm.

The multilayer polymeric insulation structure bonded to the aluminum alloy sheet metal substrate together exhibit one or more of a surface resistance of from 1 x 10¹² Ω to 1 x 10¹⁵ Ω, a volume resistance of from 1 x 10¹² Ω to 1 x 10¹⁵ Ω, a breakdown voltage of from 2 kV to 50 kV, or a comparative tracking index value of from 175 V to 400 V. In examples, the multilayer polymeric insulation structure bonded to the aluminum alloy sheet metal substrate together exhibit a surface resistance of from 1 x 10¹² Ω to 5 x 10¹² Ω, from 5 x 10¹² Ω to 1 x 10¹³ Ω, from 1 x 10¹³ Ω to 5 x 10¹³ Ω, from 5 x 10¹³ Ω to 1 x 10¹⁴ Ω, from 1 x 10¹⁴ Ω to 5 x 10¹⁴ Ω, or from 5 x 10¹⁴ Ω to 1 x 10¹⁵ Ω. In examples, the multilayer polymeric insulation structure bonded to the aluminum alloy sheet metal substrate together exhibit a breakdown voltage of from 2 kV to 5 kV, from 5 kV to 10 kV, from 10 kV to 15 kV, from 15 kV to 20 kV, from 20 kV to 25 kV, from 25 kV, to 30 kV, from 30 kV to 35 kV, from 35 kV to 40 kV, from 40 kV to 45 kV, or from 45 kV to 50 kV. In examples, the multilayer polymeric insulation structure bonded to the aluminum alloy sheet metal substrate together exhibit a comparative tracking index value of from 175 V to 180 V, from 180 V to 185 V, from 185 V to 190 V, from 190 V to 195 V, from 195 V to 200 V, from 200 V to 205 V, from 205 V to 210 V, from 200 V to 205 V, from 205 V to 210 V, from 210 V to 215 V, from 215 V to 220 V, from 220 V to 225 V, from 225 V to 230 V, from 230 V to 235 V, from 235 V to 240 V, from 240 V to 245 V, from 245 V to 250 V, from 250 V to 255 V, from 255 V to 260 V, from 260 V to 265 V, from 265 V to 270 V, from 270 V to 275 V, from 275 V to 280 V, from 280 V to 285 V, from 285 V to 290 V, from 290 V to 295 V, from 295 V to 300 V, from 300 V to 305 V, from 305 V to 310 V, from 300 V to 305 V, from 305 V to 310 V, from 310 V to 315 V, from 315 V to 320 V, from 320 V to 325 V, from 325 V to 330 V, from 330 V to 335 V, from 335 V to 340 V, from 340 V to 345 V, from 345 V to 350 V, from 350 V to 355 V, from 355 V to 360 V, from 360 V to 365 V, from 365 V to 370 V, from 370 V to 375 V, from 375 V to 380 V, from 380 V to 385 V, from 385 V to 390 V, from 390 V to 395 V, or from 395 V to 400 V.

Optionally, the joining layer comprises a first polyester film and wherein the top polymer layer comprises a second polyester film having a different composition from the first polyester film. Optionally, the joining layer comprises a polymeric sealing layer exhibiting a first melting temperature and wherein the top polymer layer exhibits a second melting temperature or a decomposition temperature that is higher than the first melting temperature. Optionally, the top polymer layer comprises polyethylene, polypropylene, and/or polyethylene terephthalate.

Optionally, the first melting temperature is from 150 °C to 250 °C, such as from 150 °C to 155 °C, from 155 °C to 160 °C, from 160 °C to 165 °C, from 165 °C to 170 °C, from 170 °C to 175 °C, from 175 °C to 180 °C, from 180 °C to 185 °C, from 185 °C to 190 °C, from 190 °C to 195 °C, from 195 °C to 200 °C, from 200 °C to 205 °C, from 205 °C to 210 °C, from 210 °C to 215 °C, from 215 °C to 220 °C, from 220 °C to 225 °C, from 225 °C to 230 °C, from 230 °C to 235 °C, from 235 °C to 240 °C, from 240 °C to 245 °C, or from 245 °C to 250 °C.

Optionally, bonding comprises subjecting the multilayer polymeric insulation structure and the aluminum alloy sheet metal substrate to lamination conditions including exposure to a lamination temperature of from 175 °C to 300 °C and/or exposure to a lamination pressure of from 1 bar to 7 bar. Optionally, the lamination temperature is from 175 °C to 180 °C, from 180 °C to 185 °C, from 185 °C to 190 °C, from 190 °C to 195 °C, from 195 °C to 200 °C, from 200 °C to 205 °C, from 205 °C to 210 °C, from 210 °C to 215 °C, from 215 °C to 220 °C, from 220 °C to 225 °C, from 225 °C to 230 °C, from 230 °C to 235 °C, from 235 °C to 240 °C, from 240 °C to 245 °C, from 245 °C to 250 °C, from 250 °C to 255 °C, from 255 °C to 260 °C, from 260 °C to 265 °C, from 265 °C to 270 °C, from 270 °C to 275 °C, from 275 °C to 280 °C, from 280 °C to 285 °C, from 285 °C to 290 °C, from 290 °C to 295 °C, or from 295 °C to 300 °C. Optionally, the lamination pressure if from 1 bar to 1.5 bar, from 1.5 bar to 2 bar, from 2 bar to 2.5 bar, from 2.5 bar to 3 bar, from 3 bar to 3.5 bar, from 3.5 bar to 4 bar, from 4 bar to 4.5 bar, from 4.5 bar to 5 bar, from 5 bar to 5.5 bar, from 5.5 bar to 6 bar, from 6 bar to 6.5 bar, or from 6.5 bar to 7 bar.

Optionally, methods of this aspect may further comprise annealing the bonded product at an annealing temperature of from 175 °C to 300 °C, such as from 175 °C to 180 °C, from 180 °C to 185 °C, from 185 °C to 190 °C, from 190 °C to 195 °C, from 195 °C to 200 °C, from 200 °C to 205 °C, from 205 °C to 210 °C, from 210 °C to 215 °C, from 215 °C to 220 °C, from 220 °C to 225 °C, from 225 °C to 230 °C, from 230 °C to 235 °C, from 235 °C to 240 °C, from 240 °C to 245 °C, from 245 °C to 250 °C, from 250 °C to 255 °C, from 255 °C to 260 °C, from 260 °C to 265 °C, from 265 °C to 270 °C, from 270 °C to 275 °C, from 275 °C to 280 °C, from 280 °C to 285 °C, from 285 °C to 290 °C, from 290 °C to 295 °C, or from 295 °C to 300 °C.

Optionally, multilayer polymeric insulation structure is bonded to the surface of the aluminum alloy sheet metal substrate without use of an adhesive layer between the aluminum alloy sheet metal substrate and the multilayer polymeric insulation structure. Optionally, no adhesive layer is positioned between the aluminum alloy sheet metal substrate and the multilayer polymeric insulation structure. Optionally, the joining layer comprises an adhesive layer between the aluminum alloy sheet metal substrate and the top polymer layer.

For example, in some cases the adhesive layer is disposed on the aluminum alloy sheet metal substrate prior to bonding the aluminum alloy sheet metal substrate to the top polymer layer; or the adhesive layer is disposed on the top polymer layer prior to bonding the aluminum alloy sheet metal substrate to the top polymer layer.

Optionally, the aluminum alloy sheet metal substrate comprises a surface pretreatment coating on an aluminum alloy sheet metal base layer. For example, in some cases the surface pretreatment coating comprises a Ti-Zr-based conversion coating, a Cr-based conversion coating, or a copolymer-based coating.

Optionally, methods of this aspect may further comprise subjecting the bonded product to one or more forming processes to generate a formed product. Example processes include, but are not limited to, stamping, roll-forming, etc.

The present disclosure provides structural enclosures for devices, such as electronic devices. Such a structural enclosure comprises an electrically insulated metal product, the electrically insulated metal product comprising an aluminum alloy sheet metal substrate; and a multilayer polymeric insulation structure bonded to the aluminum alloy sheet metal substrate. The multilayer polymeric insulation structure comprises a joining layer adjacent to the aluminum alloy sheet metal substrate and a top polymer layer over the joining layer. The multilayer polymeric insulation structure has a thickness of from 5 µm to 100 µm, such as from 5 µm to 100 µm, such as from 5 µm to 10 µm, from 10 µm to 15 µm, from 15 µm to 20 µm, from 20 µm to 25 µm, from 25 µm to 30 µm, from 30 µm to 35 µm, from 35 µm to 40 µm, from 40 µm to 45 µm, from 45 µm to 50 µm, from 50 µm to 55 µm, from 55 µm to 60 µm, from 60 µm to 65 µm, from 65 µm to 70 µm, from 70 µm to 75 µm, from 75 µm to 80 µm, from 80 µm to 85 µm, from 85 µm to 90 µm, from 90 µm to 95 µm, or from 95 µm to 100 µm.

The multilayer polymeric insulation structure bonded to the aluminum alloy sheet metal substrate together exhibit one or more of a surface resistance of from 1 x 10¹² Ω to 1 x 10¹⁵ Ω, a volume resistance of from 1 x 10¹² Ω to 1 x 10¹⁵ Ω, a breakdown voltage of from 2 kV to 50 kV, or a comparative tracking index value of from 175 V to 400 V. In some examples, the multilayer polymeric insulation structure bonded to the aluminum alloy sheet metal substrate together exhibit a surface resistance of from 1 x 10¹² Ω to 5 x 10¹² Ω, from 5 x 10¹² Ω to 1 x 10¹³ Ω, from 1 x 10¹³ Ω to 5 x 10¹² Ω, from 5 x 10¹³ Ω to 1 x 10¹⁴ Ω, from 1 x 10¹⁴ Ω to 5 x 10¹⁴ Ω, or from 5 x 10¹⁴ Ω to 1 x 10¹⁵ Ω. In some examples, the multilayer polymeric insulation structure bonded to the aluminum alloy sheet metal substrate together exhibit a breakdown voltage of from 2 kV to 5 kV, from 5 kV to 10 kV, from 10 kV to 15 kV, from 15 kV to 20 kV, from 20 kV to 25 kV, from 25 kV, to 30 kV, from 30 kV to 35 kV, from 35 kV to 40 kV, from 40 kV to 45 kV, or from 45 kV to 50 kV. In some examples, the multilayer polymeric insulation structure bonded to the aluminum alloy sheet metal substrate together exhibit a comparative tracking index value of from 175 V to 180 V, from 180 V to 185 V, from 185 V to 190 V, from 190 V to 195 V, from 195 V to 200 V, from 200 V to 205 V, from 205 V to 210 V, from 200 V to 205 V, from 205 V to 210 V, from 210 V to 215 V, from 215 V to 220 V, from 220 V to 225 V, from 225 V to 230 V, from 230 V to 235 V, from 235 V to 240 V, from 240 V to 245 V, from 245 V to 250 V, from 250 V to 255 V, from 255 V to 260 V, from 260 V to 265 V, from 265 V to 270 V, from 270 V to 275 V, from 275 V to 280 V, from 280 V to 285 V, from 285 V to 290 V, from 290 V to 295 V, from 295 V to 300 V, from 300 V to 305 V, from 305 V to 310 V, from 300 V to 305 V, from 305 V to 310 V, from 310 V to 315 V, from 315 V to 320 V, from 320 V to 325 V, from 325 V to 330 V, from 330 V to 335 V, from 335 V to 340 V, from 340 V to 345 V, from 345 V to 350 V, from 350 V to 355 V, from 355 V to 360 V, from 360 V to 365 V, from 365 V to 370 V, from 370 V to 375 V, from 375 V to 380 V, from 380 V to 385 V, from 385 V to 390 V, from 390 V to 395 V, or from 395 V to 400 V.

Other objects and advantages will be apparent from the following detailed description of non-limiting examples.

### BRIEF DESCRIPTION OF THE FIGURES

The specification makes reference to the following appended figures, in which use of like reference numerals in different figures is intended to illustrate like or analogous components.
FIG. 1 provides a schematic illustration of an example electrically insulated metal product.
FIG. 2 provides a schematic overview of an example method for making a rolled aluminum alloy product.
FIG. 3 provides a schematic overview of an example method for making an electrically insulated metal product.
FIG. 4 provides a schematic illustration of laminating a polymeric insulating film to an aluminum alloy sheet metal substrate.
FIG. 5 provides a schematic exploded view of an example structural enclosure for a device.
FIG. 6 provides photographs of samples of electrically insulated metal products after being subjected to comparative tracking index testing.
FIG. 7 provides photographs of samples of electrically insulated metal products after being subjected to adhesion performance testing.

### DETAILED DESCRIPTION

Described herein are electrically insulated metal products and methods of making electrically insulated metal products. The metal products include aluminum alloy sheet metal substrates with a coating or layer of a multilayer polymeric insulating film disposed on one or more surfaces. The metal products can be processed to any suitable shape or form, such as by way of subjecting the electrically insulated metal product to forming, stamping, or other processing, allowing structural enclosures to be prepared from the electrically insulated metal products, such as structural enclosures for electrical or electronics devices for which electrical insulation may be desirable to prevent contact or short-circuiting from occurring.

The multilayer polymeric insulating film can comprise a sealing layer, allowing the multilayer polymeric insulating film to be laminated to the surface of the base sheet metal substrate, such as by exposing the multilayer polymeric insulating film to heat and/or pressure as it is applied to the sheet metal substrate. The multilayer polymeric insulating film bonded to the base sheet metal substrate exhibits or is characterized by electrical insulating characteristics, including a surface resistance of from 1 x 10¹² Ω to 1 x 10¹⁵ Ω, a volume resistance of from 1 x 10¹² Ω to 1 x 10¹⁵ Ω, a breakdown voltage of from 2 kV to 50 kV and/or a comparative tracking index value of from 175 V to 400 V. Such characteristics can be achieved using thin layers of the multilayer polymeric insulating film, for example with thicknesses of from 5 µm to 100 µm.

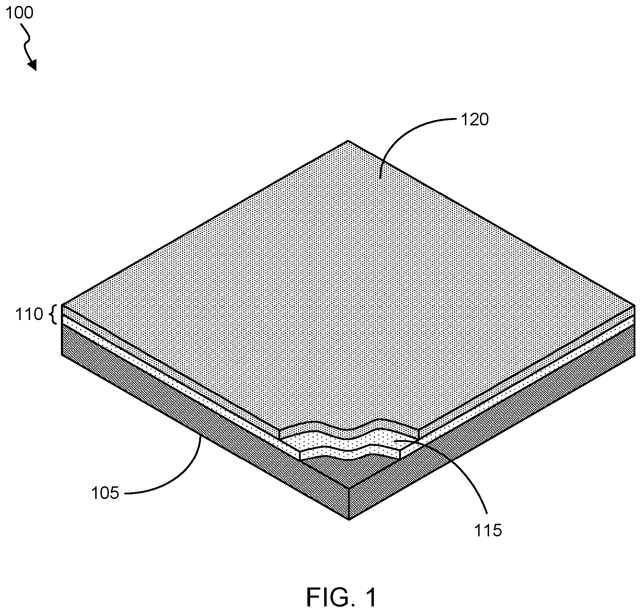

FIG. 1 provides a schematic illustration of an example electrically insulated metal product 100. As illustrated, electrically insulated metal product 100 comprises an aluminum alloy sheet metal substrate 105 and a multilayer polymeric insulating film 110 disposed on the aluminum alloy sheet metal substrate 105. Although the multilayer polymeric insulating film 110 is shown on only the top surface of the aluminum alloy sheet metal substrate 105 in FIG. 1, examples where both top and bottom surfaces of an aluminum alloy sheet metal substrate include multilayer polymeric insulating films are included in the present description.

Multilayer polymeric insulating film 110 may comprise a plurality of different films or layers, such as attached, connected to, or adjoined to one another, including a joining layer 115 in contact with a surface of the aluminum alloy sheet metal substrate 105, and a top polymer layer 120 adjacent to the joining layer 115. The joining layer 115 and top polymer layer 120 can comprise different materials, or they can be the same. In some examples, the joining layer may comprise a sealing layer. In some examples, the joining layer 115 and the top polymer layer 120 comprise polyester layers, such as one or more of polyethylene, polypropylene, and/or polyethylene terephthalate. In some examples, the joining layer 115 comprises a first polyester film and the top polymer layer 120 comprises a second polyester film having a different composition from the first polyester film. The joining layer 115 may, for example, exhibit a lower melting temperature than the top polymer layer 120. In some examples, the sealing layer 115 may exhibit a melting temperature of from 150 °C to 250 °C, such as from 150 °C to 155 °C, from 155 °C to 160 °C, from 160 °C to 165 °C, from 165 °C to 170 °C, from 170 °C to 175 °C, from 175 °C to 180 °C, from 180 °C to 185 °C, from 185 °C to 190 °C, from 190 °C to 195 °C, from 195 °C to 200 °C, from 200 °C to 205 °C, from 205 °C to 210 °C, from 210 °C to 215 °C, from 215 °C to 220 °C, from 220 °C to 225 °C, from 225 °C to 230 °C, from 230 °C to 235 °C, from 235 °C to 240 °C, from 240 °C to 245 °C, or from 245 °C to 250 °C. The multilayer polymeric insulating film 110 is free of pinholes or other defects that would provide a conductive pathway to the aluminum alloy sheet metal substrate 105. Optionally, the joining layer 115 may comprise an adhesive layer. In some examples, joining layer 115 may be an adhesive layer applied to the aluminum alloy sheet metal substrate 105 prior to bonding with the top polymer layer 120. In other examples, joining layer 115 may be an adhesive layer applied to the top polymer layer 120 prior to bonding with the aluminum alloy sheet metal substrate 105. In some examples, useful adhesives include, but are not limited to, acrylic adhesives, polyester adhesives, or epoxy adhesives.

The aluminum alloy sheet metal substrate 105 can comprise any suitable aluminum alloy, and may optionally include a surface pretreatment layer, anodization layer, or oxide surface layer. With the multilayer polymeric insulating film 110 on its surface, the aluminum alloy sheet metal substrate 105 can be subjected to forming or other processing to provide an electrically insulated metal product in a non-planar geometry, such as useful for making device enclosures, for example. Additionally, other electrically insulated metal products can be prepared from the aluminum alloy sheet metal substrate 105 and multilayer polymeric insulating film 110.

### Definitions and Descriptions:

As used herein, the terms "invention," "the invention," "this invention" and "the present invention" are intended to refer broadly to all of the subject matter of this patent application and the claims below. Statements containing these terms should be understood not to limit the subject matter described herein or to limit the meaning or scope of the patent claims below.

In this description, reference is made to alloys identified by AA numbers and other related designations, such as "series" or "7xxx." For an understanding of the number designation system most commonly used in naming and identifying aluminum and its alloys, see "International Alloy Designations and Chemical Composition Limits for Wrought Aluminum and Wrought Aluminum Alloys" or "Registration Record of Aluminum Association Alloy Designations and Chemical Compositions Limits for Aluminum Alloys in the Form of Castings and Ingot," both published by The Aluminum Association.

As used herein, a plate generally has a thickness of greater than about 15 mm. For example, a plate may refer to an aluminum product having a thickness of greater than about 15 mm, greater than about 20 mm, greater than about 25 mm, greater than about 30 mm, greater than about 35 mm, greater than about 40 mm, greater than about 45 mm, greater than about 50 mm, or greater than about 100 mm.

As used herein, a shate (also referred to as a sheet plate) generally has a thickness of from about 4 mm to about 15 mm. For example, a shate may have a thickness of about 4 mm, about 5 mm, about 6 mm, about 7 mm, about 8 mm, about 9 mm, about 10 mm, about 11 mm, about 12 mm, about 13 mm, about 14 mm, or about 15 mm.

As used herein, a sheet generally refers to an aluminum product having a thickness of less than about 4 mm. For example, a sheet may have a thickness of less than about 4 mm, less than about 3 mm, less than about 2 mm, less than about 1 mm, less than about 0.5 mm, or less than about 0.3 mm (e.g., about 0.2 mm).

Reference may be made in this application to alloy temper or condition. For an understanding of the alloy temper descriptions most commonly used, see "American National Standards (ANSI) H35 on Alloy and Temper Designation Systems." An F condition or temper refers to an aluminum alloy as fabricated. An O condition or temper refers to an aluminum alloy after annealing. An Hxx condition or temper, also referred to herein as an H temper, refers to a non-heat treatable aluminum alloy after cold rolling with or without thermal treatment (e.g., annealing). Suitable H tempers include HX1, HX2, HX3 HX4, HX5, HX6, HX7, HX8, or HX9 tempers. A T1 condition or temper refers to an aluminum alloy cooled from hot working and naturally aged (e.g., at room temperature). A T2 condition or temper refers to an aluminum alloy cooled from hot working, cold worked and naturally aged. A T3 condition or temper refers to an aluminum alloy solution heat treated, cold worked, and naturally aged. A T4 condition or temper refers to an aluminum alloy solution heat treated and naturally aged. A T5 condition or temper refers to an aluminum alloy cooled from hot working and artificially aged (at elevated temperatures). A T6 condition or temper refers to an aluminum alloy solution heat treated and artificially aged. A T7 condition or temper refers to an aluminum alloy solution heat treated and artificially overaged. A T8x condition or temper refers to an aluminum alloy solution heat treated, cold worked, and artificially aged. A T9 condition or temper refers to an aluminum alloy solution heat treated, artificially aged, and cold worked. A W condition or temper refers to an aluminum alloy after solution heat treatment.

As used herein, terms such as "cast metal product," "cast product," "cast aluminum alloy product," and the like are interchangeable and refer to a product produced by direct chill casting (including direct chill co-casting) or semi-continuous casting, continuous casting (including, for example, by use of a twin belt caster, a twin roll caster, a block caster, or any other continuous caster), electromagnetic casting, hot top casting, or any other casting method.

As used herein, the meaning of "room temperature" can include a temperature of from about 15 °C to about 30 °C, for example about 15 °C, about 16 °C, about 17 °C, about 18 °C, about 19 °C, about 20 °C, about 21 °C, about 22 °C, about 23 °C, about 24 °C, about 25 °C, about 26 °C, about 27 °C, about 28 °C, about 29 °C, or about 30 °C. As used herein, the meaning of "ambient conditions" can include temperatures of about room temperature, relative humidity of from about 20% to about 100%, and barometric pressure of from about 975 millibar (mbar) to about 1050 mbar. For example, relative humidity can be about 20%, about 21%, about 22%, about 23%, about 24%, about 25%, about 26%, about 27%, about 28%, about 29%, about 30%, about 31%, about 32%, about 33%, about 34%, about 35%, about 36%, about 37%, about 38%, about 39%, about 40%, about 41%, about 42%, about 43%, about 44%, about 45%, about 46%, about 47%, about 48%, about 49%, about 50%, about 51%, about 52%, about 53%, about 54%, about 55%, about 56%, about 57%, about 58%, about 59%, about 60%, about 61%, about 62%, about 63%, about 64%, about 65%, about 66%, about 67%, about 68%, about 69%, about 70%, about 71%, about 72%, about 73%, about 74%, about 75%, about 76%, about 77%, about 78%, about 79%, about 80%, about 81%, about 82%, about 83%, about 84%, about 85%, about 86%, about 87%, about 88%, about 89%, about 90%, about 91%, about 92%, about 93%, about 94%, about 95%, about 96%, about 97%, about 98%, about 99%, about 100%, or anywhere in between. For example, barometric pressure can be about 975 mbar, about 980 mbar, about 985 mbar, about 990 mbar, about 995 mbar, about 1000 mbar, about 1005 mbar, about 1010 mbar, about 1015 mbar, about 1020 mbar, about 1025 mbar, about 1030 mbar, about 1035 mbar, about 1040 mbar, about 1045 mbar, about 1050 mbar, or anywhere in between.

All ranges disclosed herein are to be understood to encompass any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more, e.g. 1 to 6.1, and ending with a maximum value of 10 or less, e.g., 5.5 to 10. Unless stated otherwise, the expression "up to" when referring to the compositional amount of an element means that element is optional and includes a zero percent composition of that particular element. Unless stated otherwise, all compositional percentages are in weight percent (wt.%).

As used herein, the meaning of "a," "an," and "the" includes singular and plural references unless the context clearly dictates otherwise.

In examples, aluminum alloy products and their components may be described in terms of their elemental composition in weight percent (wt.%). In each alloy, the remainder is aluminum, with a maximum wt.% of 0.15% for the sum of all impurities.

Incidental elements, such as grain refiners and deoxidizers, or other additives may be present in the invention and may add other characteristics on their own without departing from or significantly altering the alloy described herein or the characteristics of the alloy described herein.

Unavoidable impurities, including materials or elements may be present in an alloy in minor amounts due to inherent properties of aluminum or leaching from contact with processing equipment. Some alloys, as described, may contain no more than about 0.25 wt.% of any element besides the alloying elements, incidental elements, and unavoidable impurities.

### Methods of Producing the Alloys and Aluminum Alloy Products

The aluminum alloy products described herein, such as aluminum alloy sheet metal substrates, can be prepare using suitable methods. For example, aluminum alloys may be cast, homogenized, hot-rolled, cold-rolled, heat treated, formed, or the like to generate aluminum alloy products.

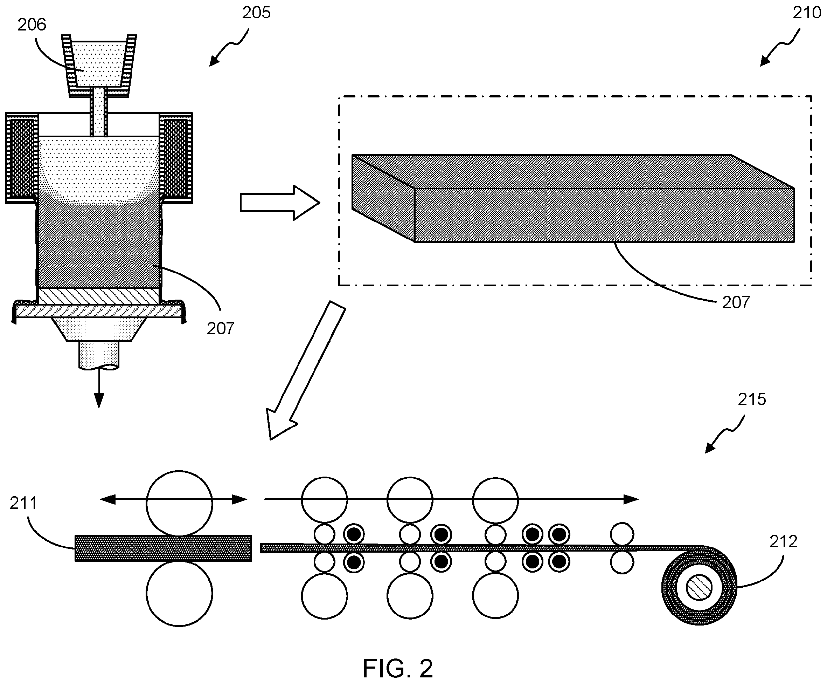

FIG. 2 provides an overview of an example method of making an aluminum alloy product. The method of FIG. 2 begins at 205, where an aluminum alloy 206 is cast to form a cast aluminum alloy product 207, such as an ingot or other cast product. At 210, the cast aluminum alloy product 207 is homogenized to form a homogenized aluminum alloy product 211. At 215, the homogenized aluminum alloy product 211 is subjected to one or more hot rolling passes and/or one or more cold rolling passes to form a rolled aluminum alloy product 212, which may correspond to an aluminum alloy article, such as an aluminum alloy plate, an aluminum alloy shate, or an aluminum alloy sheet. Optionally, the rolled aluminum alloy product 212 is subjected to additional processing steps, as described below, to form an aluminum alloy article.

Non-limiting examples of casting processes include a direct chill (DC) casting process or a continuous casting (CC) process. For example, FIG. 2 depicts a schematic illustration of a DC casting process at 205, but other casting processes can be used. A continuous casting system can include a pair of moving opposed casting surfaces (e.g., moving opposed belts, rolls or blocks), a casting cavity between the pair of moving opposed casting surfaces, and a molten metal injector. The molten metal injector can have an end opening from which molten metal can exit the molten metal injector and be injected into the casting cavity.

A cast aluminum alloy product, such as a cast ingot, cast slab, or other cast product, can be processed by any desirable techniques. Optionally, the processing steps can be used to prepare rolled aluminum alloy products, such as aluminum alloy sheets. Example optional processing steps include, but are not limited to, homogenization, hot rolling, cold rolling, annealing, solution heat treatment, and pre-aging.

In a homogenization step, a cast product may be heated to a temperature ranging from about 400 °C to about 600 °C. For example, the cast product can be heated to a temperature of about 400 °C, about 410 °C, about 420 °C, about 430 °C, about 440 °C, about 450 °C, about 460 °C, about 470 °C, about 480 °C, about 490 °C, about 500 °C, about 510 °C, about 520 °C, about 530 °C, about 540 °C, about 550 °C, about 560 °C, about 570 °C, about 580 °C, about 590 °C, or about 600 °C. The product may then be allowed to soak (i.e., held at the indicated temperature) for a period of time to form a homogenized product. In some examples, the total time for the homogenization step, including the heating and soaking phases, can be up to 24 hours. For example, the product can be heated up to 500 °C to 600 °C, and soaked, for a total time of up to 18 hours for the homogenization step. Optionally, the product can be heated to below 490 °C and soaked, for a total time of greater than 18 hours for the homogenization step. In some cases, the homogenization step comprises multiple processes. In some non-limiting examples, the homogenization step includes heating a cast product to a first temperature for a first period of time followed by heating to a second temperature for a second period of time. For example, a cast product can be heated to about 465 °C for about 3.5 hours and then heated to about 480 °C for about 6 hours.

Following a homogenization step, a hot rolling step can be optionally performed. Prior to the start of hot rolling, the homogenized product can be allowed to cool to a temperature between 300 °C to 450 °C. For example, the homogenized product can be allowed to cool to a temperature of between 325 °C to 425 °C or from 350 °C to 400 °C. The homogenized product can then be hot rolled at a temperature between 300 °C to 450 °C to form a hot rolled plate, a hot rolled shate or a hot rolled sheet having a gauge between 3 mm and 200 mm (e.g., 3 mm, 4 mm, 5 mm, 6 mm, 7 mm, 8 mm, 9 mm, 10 mm, 15 mm, 20 mm, 25 mm, 30 mm, 35 mm, 40 mm, 45 mm, 50 mm, 55 mm, 60 mm, 65 mm, 70 mm, 75 mm, 80 mm, 85 mm, 90 mm, 95 mm, 100 mm, 110 mm, 120 mm, 130 mm, 140 mm, 150 mm, 160 mm, 170 mm, 180 mm, 190 mm, 200 mm, or anywhere in between).

Optionally, the cast product can be a continuously cast product that can be allowed to cool to a temperature between 300 °C to 450 °C. For example, the continuously cast product can be allowed to cool to a temperature of between 325 °C to 425 °C or from 350 °C to 400 °C. The continuously cast products can then be hot rolled at a temperature between 300 °C to 450 °C to form a hot rolled plate, a hot rolled shate or a hot rolled sheet having a gauge between 3 mm and 200 mm (e.g., 3 mm, 4 mm, 5 mm, 6 mm, 7 mm, 8 mm, 9 mm, 10 mm, 15 mm, 20 mm, 25 mm, 30 mm, 35 mm, 40 mm, 45 mm, 50 mm, 55 mm, 60 mm, 65 mm, 70 mm, 75 mm, 80 mm, 85 mm, 90 mm, 95 mm, 100 mm, 110 mm, 120 mm, 130 mm, 140 mm, 150 mm, 160 mm, 170 mm, 180 mm, 190 mm, 200 mm, or anywhere in between). During hot rolling, temperatures and other operating parameters can be controlled so that the temperature of the hot rolled intermediate product upon exit from the hot rolling mill is no more than 470 °C, no more than 450 °C, no more than 440 °C, or no more than 430 °C.

Cast, homogenized, or hot-rolled products can be optionally cold rolled using cold rolling mills into thinner products, such as a cold rolled sheet. The cold rolled product can have a gauge between about 0.5 to 10 mm, e.g., between about 0.7 to 6.5 mm. Optionally, the cold rolled product can have a gauge of 0.5 mm, 1.0 mm, 1.5 mm, 2.0 mm, 2.5 mm, 3.0 mm, 3.5 mm, 4.0 mm, 4.5 mm, 5.0 mm, 5.5 mm, 6.0 mm, 6.5 mm, 7.0 mm, 7.5 mm, 8.0 mm, 8.5 mm, 9.0 mm, 9.5 mm, or 10.0 mm. The cold rolling can be performed to result in a final gauge thickness that represents a gauge reduction of up to 85% (e.g., up to 10%, up to 20%, up to 30%, up to 40%, up to 50%, up to 60%, up to 70%, up to 80%, or up to 85% reduction) as compared to a gauge prior to the start of cold rolling. Optionally, an interannealing step can be performed during the cold rolling step, such as where a first cold rolling process is applied, followed by an annealing process (interannealing), followed by a second cold rolling process. The interannealing step can be performed at a temperature of from about 300 °C to about 450 °C (e.g., about 310 °C, about 320 °C, about 330 °C, about 340 °C, about 350 °C, about 360 °C, about 370 °C, about 380 °C, about 390 °C, about 400 °C, about 410 °C, about 420 °C, about 430 °C, about 440 °C, or about 450 °C). In some cases, the interannealing step comprises multiple processes. In some non-limiting examples, the interannealing step includes heating the partially cold rolled product to a first temperature for a first period of time followed by heating to a second temperature for a second period of time. For example, the partially cold rolled product can be heated to about 410 °C for about 1 hour and then heated to about 330 °C for about 2 hours.

Subsequently, a cast, homogenized, or rolled product can optionally undergo a solution heat treatment step. The solution heat treatment step can be any suitable treatment for the product that results in solutionizing of soluble particles. The cast, homogenized, or rolled product can be heated to a peak metal temperature (PMT) of up to 590 °C (e.g., from 400 °C to 590 °C) and soaked for a period of time at the PMT to form a hot product. For example, the cast, homogenized, or rolled product can be soaked at 480 °C for a soak time of up to 30 minutes (e.g., 0 seconds, 60 seconds, 75 seconds, 90 seconds, 5 minutes, 10 minutes, 20 minutes, 25 minutes, or 30 minutes). After heating and soaking, the hot product is rapidly cooled at rates greater than 200 °C/s to a temperature between 500 and 200 °C to form a heat-treated product. In one example, the hot product is cooled at a quench rate of above 200 °C/second at temperatures between 450 °C and 200 °C. Optionally, the cooling rates can be faster in other cases. Optionally, the temperature can be lower in other cases. In one example, the hot product is cooled at a quench rate of above 200 °C/second at temperatures between 450 °C and 200 °C.

After quenching, the heat-treated product can optionally undergo a pre-aging treatment by reheating before coiling. The pre-aging treatment can be performed at a temperature of from about 70 °C to about 125 °C for a period of time of up to 6 hours. For example, the pre-aging treatment can be performed at a temperature of about 70 °C, about 75 °C, about 80 °C, about 85 °C, about 90 °C, about 95 °C, about 100 °C, about 105 °C, about 110 °C, about 115 °C, about 120 °C, or about 125 °C. Optionally, the pre-aging treatment can be performed for about 30 minutes, about 1 hour, about 2 hours, about 3 hours, about 4 hours, about 5 hours, or about 6 hours. The pre-aging treatment can be carried out by passing the heat-treated product through a heating device, such as a device that emits radiant heat, convective heat, induction heat, infrared heat, or the like.

The cast products described herein can be used to make products in the form of sheets, plates, or other suitable products. For example, plates including the products as described herein can be prepared by processing an ingot in a homogenization step or casting a product in a continuous caster followed by a hot rolling step. In the hot rolling step, the cast product can be hot rolled to a 200 mm thick gauge or less (e.g., from about 10 mm to about 200 mm). For example, the cast product can be hot rolled to a plate having a final gauge thickness of about 10 mm to about 175 mm, about 15 mm to about 150 mm, about 20 mm to about 125 mm, about 25 mm to about 100 mm, about 30 mm to about 75 mm, or about 35 mm to about 50 mm. In some cases, plates may be rolled into thinner metal products, such as sheets.

### Methods of Using the Disclosed Aluminum Alloy Products

The aluminum alloy products described herein, such as electrically insulated aluminum alloy products, can be used in automotive applications and other transportation applications, including aircraft and railway applications. For example, the disclosed aluminum alloy products can be used to prepare automotive structural parts, such as bumpers, side beams, roof beams, cross beams, pillar reinforcements (e.g., A-pillars, B-pillars, and C-pillars), inner panels, outer panels, side panels, inner hoods, outer hoods, or trunk lid panels. The aluminum alloy products and methods described herein can also be used in aircraft or railway vehicle applications, to prepare, for example, external and internal panels.

The aluminum alloy products described herein, such as electrically insulated aluminum alloy products, and the disclosed methods can also be used in electronics applications. For example, the aluminum alloy products and methods described herein can be used to prepare housings for electronic devices, including mobile phones and tablet computers. In some examples, the aluminum alloy products can be used to prepare housings for the outer casing of mobile phones (e.g., smart phones), tablet bottom chassis, and other electronics.

### Methods of Treating and Using the Metal Alloys

Described herein are methods of treating metals and metal alloys, including aluminum, aluminum alloys, magnesium, magnesium alloys, magnesium composites, and steel, among others, and the resultant treated metals and metal alloys. In some examples, the metals for use in the methods described herein include aluminum alloys, for example, 1xxx series aluminum alloys, 2xxx series aluminum alloys, 3xxx series aluminum alloys, 4xxx series aluminum alloys, 5xxx series aluminum alloys, 6xxx series aluminum alloys, 7xxx series aluminum alloys, or 8xxx series aluminum alloys. In some examples, the materials for use in the methods described herein include non-ferrous materials, including aluminum, aluminum alloys, magnesium, magnesium-based materials, magnesium alloys, magnesium composites, titanium, titanium-based materials, titanium alloys, copper, copper-based materials, composites, sheets used in composites, or any other suitable metal, non-metal or combination of materials. Monolithic as well as non-monolithic, such as roll-bonded materials, cladded alloys, clad layers, composite materials, such as but not limited to carbon fiber-containing materials, or various other materials are also useful with the methods described herein. In some examples, aluminum alloys containing iron are useful with the methods described herein.

By way of non-limiting example, exemplary 1xxx series aluminum alloys for use in the methods described herein can include AA1100, AA1100A, AA1200, AA1200A, AA1300, AA1110, AA1120, AA1230, AA1230A, AA1235, AA1435, AA1145, AA1345, AA1445, AA1150, AA1350, AA1350A, AA1450, AA1370, AA1275, AA1185, AA1285, AA1385, AA1188, AA1190, AA1290, AA1193, AA1198, or AA1199.

Non-limiting exemplary 2xxx series aluminum alloys for use in the methods described herein can include AA2001, A2002, AA2004, AA2005, AA2006, AA2007, AA2007A, AA2007B, AA2008, AA2009, AA2010, AA2011, AA2011A, AA2111, AA2111A, AA2111B, AA2012, AA2013, AA2014, AA2014A, AA2214, AA2015, AA2016, AA2017, AA2017A, AA2117, AA2018, AA2218, AA2618, AA2618A, AA2219, AA2319, AA2419, AA2519, AA2021, AA2022, AA2023, AA2024, AA2024A, AA2124, AA2224, AA2224A, AA2324, AA2424, AA2524, AA2624, AA2724, AA2824, AA2025, AA2026, AA2027, AA2028, AA2028A, AA2028B, AA2028C, AA2029, AA2030, AA2031, AA2032, AA2034, AA2036, AA2037, AA2038, AA2039, AA2139, AA2040, AA2041, AA2044, AA2045, AA2050, AA2055, AA2056, AA2060, AA2065, AA2070, AA2076, AA2090, AA2091, AA2094, AA2095, AA2195, AA2295, AA2196, AA2296, AA2097, AA2197, AA2297, AA2397, AA2098, AA2198, AA2099, or AA2199.

Non-limiting exemplary 3xxx series aluminum alloys for use in the methods described herein can include AA3002, AA3102, AA3003, AA3103, AA3103A, AA3103B, AA3203, AA3403, AA3004, AA3004A, AA3104, AA3204, AA3304, AA3005, AA3005A, AA3105, AA3105A, AA3105B, AA3007, AA3107, AA3207, AA3207A, AA3307, AA3009, AA3010, AA3110, AA3011, AA3012, AA3012A, AA3013, AA3014, AA3015, AA3016, AA3017, AA3019, AA3020, AA3021, AA3025, AA3026, AA3030, AA3130, or AA3065.

Non-limiting exemplary 4xxx series aluminum alloys for use in the methods described herein can include AA4004, AA4104, AA4006, AA4007, AA4008, AA4009, AA4010, AA4013, AA4014, AA4015, AA4015A, AA4115, AA4016, AA4017, AA4018, AA4019, AA4020, AA4021, AA4026, AA4032, AA4043, AA4043A, AA4143, AA4343, AA4643, AA4943, AA4044, AA4045, AA4145, AA4145A, AA4046, AA4047, AA4047A, or AA4147.

Non-limiting exemplary 5xxx series aluminum alloys for use in the methods described herein product can include AA5182, AA5183, AA5005, AA5005A, AA5205, AA5305, AA5505, AA5605, AA5006, AA5106, AA5010, AA5110, AA5110A, AA5210, AA5310, AA5016, AA5017, AA5018, AA5018A, AA5019, AA5019A, AA5119, AA5119A, AA5021, AA5022, AA5023, AA5024, AA5026, AA5027, AA5028, AA5040, AA5140, AA5041, AA5042, AA5043, AA5049, AA5149, AA5249, AA5349, AA5449, AA5449A, AA5050, AA5050A, AA5050C, AA5150, AA5051, AA5051A, AA5151, AA5251, AA5251A, AA5351, AA5451, AA5052, AA5252, AA5352, AA5154, AA5154A, AA5154B, AA5154C, AA5254, AA5354, AA5454, AA5554, AA5654, AA5654A, AA5754, AA5854, AA5954, AA5056, AA5356, AA5356A, AA5456, AA5456A, AA5456B, AA5556, AA5556A, AA5556B, AA5556C, AA5257, AA5457, AA5557, AA5657, AA5058, AA5059, AA5070, AA5180, AA5180A, AA5082, AA5182, AA5083, AA5183, AA5183A, AA5283, AA5283A, AA5283B, AA5383, AA5483, AA5086, AA5186, AA5087, AA5187, or AA5088.

Non-limiting exemplary 6xxx series aluminum alloys for use in the methods described herein can include AA6101, AA6101A, AA6101B, AA6201, AA6201A, AA6401, AA6501, AA6002, AA6003, AA6103, AA6005, AA6005A, AA6005B, AA6005C, AA6105, AA6205, AA6305, AA6006, AA6106, AA6206, AA6306, AA6008, AA6009, AA6010, AA6110, AA6110A, AA6011, AA6111, AA6012, AA6012A, AA6013, AA6113, AA6014, AA6015, AA6016, AA6016A, AA6116, AA6018, AA6019, AA6020, AA6021, AA6022, AA6023, AA6024, AA6025, AA6026, AA6027, AA6028, AA6031, AA6032, AA6033, AA6040, AA6041, AA6042, AA6043, AA6151, AA6351, AA6351A, AA6451, AA6951, AA6053, AA6055, AA6056, AA6156, AA6060, AA6160, AA6260, AA6360, AA6460, AA6460B, AA6560, AA6660, AA6061, AA6061A, AA6261, AA6361, AA6162, AA6262, AA6262A, AA6063, AA6063A, AA6463, AA6463A, AA6763, A6963, AA6064, AA6064A, AA6065, AA6066, AA6068, AA6069, AA6070, AA6081, AA6181, AA6181A, AA6082, AA6082A, AA6182, AA6091, or AA6092.

Non-limiting exemplary 7xxx series aluminum alloys for use in the methods described herein can include AA7011, AA7019, AA7020, AA7021, AA7039, AA7072, AA7075, AA7085, AA7108, AA7108A, AA7015, AA7017, AA7018, AA7019A, AA7024, AA7025, AA7028, AA7030, AA7031, AA7033, AA7035, AA7035A, AA7046, AA7046A, AA7003, AA7004, AA7005, AA7009, AA7010, AA7011, AA7012, AA7014, AA7016, AA7116, AA7122, AA7023, AA7026, AA7029, AA7129, AA7229, AA7032, AA7033, AA7034, AA7036, AA7136, AA7037, AA7040, AA7140, AA7041, AA7049, AA7049A, AA7149, AA7204, AA7249, AA7349, AA7449, AA7050, AA7050A, AA7150, AA7250, AA7055, AA7155, AA7255, AA7056, AA7060, AA7064, AA7065, AA7068, AA7168, AA7175, AA7475, AA7076, AA7178, AA7278, AA7278A, AA7081, AA7181, AA7185, AA7090, AA7093, AA7095, or AA7099.

Non-limiting exemplary 8xxx series aluminum alloys for use in the methods described herein can include AA8005, AA8006, AA8007, AA8008, AA8010, AA8011, AA8011A, AA8111, AA8211, AA8112, AA8014, AA8015, AA8016, AA8017, AA8018, AA8019, AA8021, AA8021A, AA8021B, AA8022, AA8023, AA8024, AA8025, AA8026, AA8030, AA8130, AA8040, AA8050, AA8150, AA8076, AA8076A, AA8176, AA8077, AA8177, AA8079, AA8090, AA8091, or AA8093.

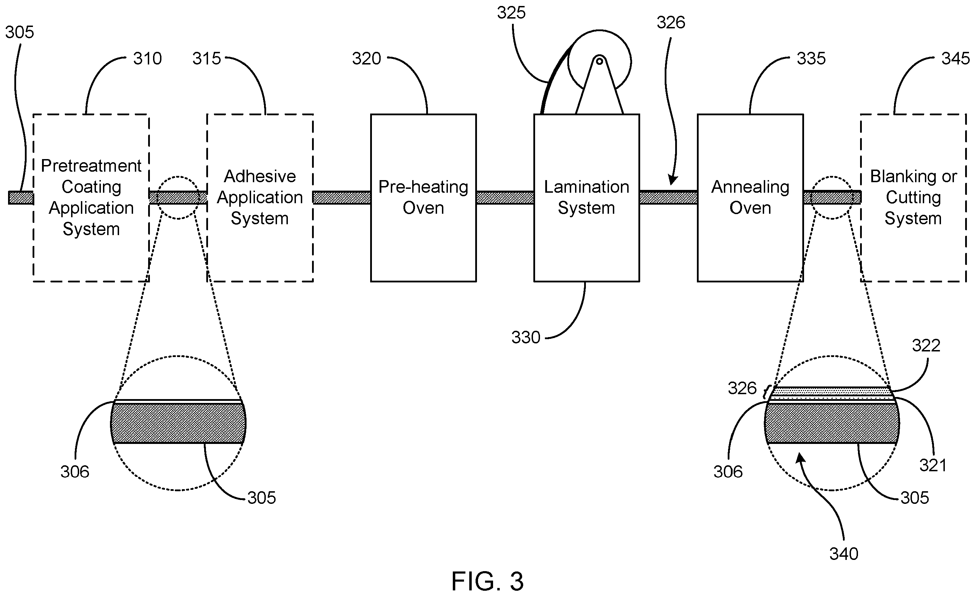

FIG. 3 provides a schematic overview of a method of treating a sheet metal substrate 305, such as comprising an aluminum alloy sheet metal substrate, to generate an electrically insulated metal product. The sheet metal substrate 305 is optionally passed into a pretreatment coating application system 310 that applies a pretreatment coating to the sheet metal substrate 305. The pretreatment coating application system 310 can be any suitable system for applying a pretreatment coating to the sheet metal substrate 305. A first expanded inset in FIG. 3 shows a pretreatment layer 306 applied to the sheet metal substrate 305.

In some cases, the sheet metal substrate 305 may be processed before entering the pretreatment coating application system. In some embodiments, the surface of the sheet metal substrate 305 may be degreased (e.g., using an acid solution or an alkaline solution) to clean the surface. In some embodiments, the sheet metal substrate 305 may be preheated before entering the pretreatment coating application system.

Optionally, the sheet metal substrate 305 can be processed at an adhesive application system 315 to apply an adhesive to the surface of the sheet metal substrate 305. Such a system is useful when a polymeric layer is to be bonded to the sheet metal substrate using an adhesive. It will be appreciated that use of adhesives to bond the polymeric film to the sheet metal substrate 305 is optional. In cases where adhesives are not used to bond the polymeric film to the sheet metal substrate 305, adhesive application system 315 can be omitted. Optionally, adhesive application system 315 comprises a roll-coating system, such as to apply an acrylic adhesive, a polyester adhesive, or an epoxy adhesive.

The sheet metal substrate 305 optionally passes into a pre-heating oven 320 that heats the sheet metal substrate 305 to a pre-heating temperature (T₁). For cases where the polymer film 325 to be applied comprises a sealing layer, the pre-heating temperature T₁ may be above the melting temperature of the sealing layer. Optionally, the pre-heating temperature T₁ is 175 °C to 300 °C, such as from 175 °C to 290 °C, from 175 °C to 280 °C, from 175 °C to 270 °C, from 175 °C to 260 °C, from 175 °C to 250 °C, from 185 °C to 300 °C, from 185 °C to 290 °C, from 185 °C to 280 °C, from 185 °C to 270 °C, from 185 °C to 260 °C, from 185 °C to 250 °C, from 195 °C to 300 °C, from 195 °C to 290 °C, from 195 °C to 280 °C, from 195 °C to 270 °C, from 195 °C to 260 °C, from 195 °C to 250 °C, from 205 °C to 300 °C, from 205 °C to 290 °C, from 205 °C to 280 °C, from 205 °C to 270 °C, from 205 °C to 260 °C, from 205 °C to 250 °C, from 215 °C to 300 °C, from 215 °C to 290 °C, from 215 °C to 280 °C, from 215 °C to 270 °C, from 215 °C to 260 °C, from 215 °C to 250 °C, from 225 °C to 300 °C, from 225 °C to 290 °C, from 225 °C to 280 °C, from 225 °C to 270 °C, from 225 °C to 260 °C, or from 225 °C to 250 °C. In terms of lower limits, T₁ may be greater than 175 °C, such as greater than 185 °C, greater than 195 °C, greater than 205 °C, or greater than 215 °C. In terms of upper limits, T1 may be less than 300 °C, such as less than 290 °C, less than 280 °C, less than 270 °C, less than 260 °C, or less than 250 °C. Optionally, the sheet metal substrate 305 may pass into the pretreatment coating application system 310, into adhesive application system 315, and into the pre-heating oven 320 in any order. Optionally, one or more of the pretreatment coating application system 310, the adhesive application system 315, or the pre-heating oven 320 are not used. Example pretreatment coatings include, but are not limited to, a Ti-Zr-based conversion coating, a Cr-based conversion coating, or a copolymer-based coating, such as a poly(vinlyphosphonic acid-co acrylic acid) coating layer. Although preheating oven 320 is described as an oven, any suitable heating methods can be used, such as an induction system, application of infrared heat, contact with heated rolls, a gas-fired oven, an electrically heated oven, or the like.

After pretreatment, adhesive application, and/or pre-heating, if used, the sheet metal substrate 305 is passed through a lamination system 330 that applies a polymer film 325 to one side of the sheet metal substrate 305. In some cases, polymer film 325 can be applied to both sides of the sheet metal substrate 305. The lamination system 330 can be any suitable system for laminating the polymer film 325 to the sheet metal substrate 305. In some cases, the lamination system 330 is a hot melt lamination system. A laminated sheet metal substrate exits the lamination system 330, combining the sheet metal substrate 305 with a multilayer polymeric insulation structure 326 bonded thereto.

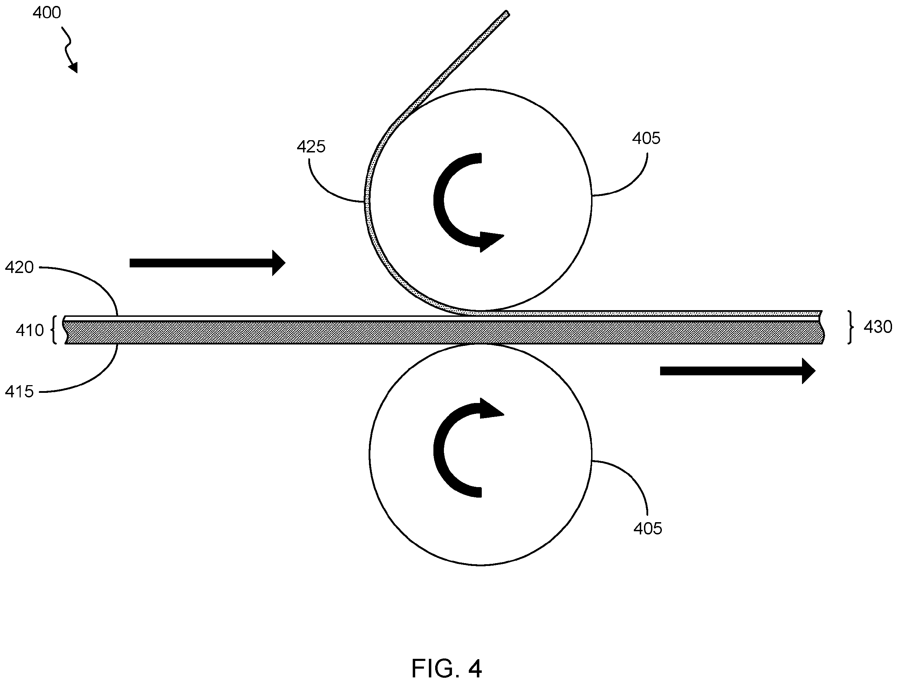

FIG. 4 provides a schematic diagram of a lamination system 400 according to certain aspects of the present disclosure. The lamination system 400 can be the lamination system 330 of FIG. 3, or another lamination system. Certain elements depicted in FIG. 4 are shown at an exaggerated scale for demonstrative purposes only.

The lamination system 400 can include a pair of rollers 405 through which a sheet metal substrate 410 may pass. The sheet metal substrate 410 can include a sheet metal base layer 415 that has been pretreated, such as by pretreatment coating application system 310 of FIG. 3, optionally with an adhesive layer there, such as applied by adhesive application system 315 of FIG. 3, and/or pre-heated, such as by pre-heating oven 320 of FIG. 3. In some cases, the pretreated sheet metal substrate 410 includes one or more pretreatment layers 420, such as one or more conversion coatings, oxide layers, anodization layers, polymer pretreatments, or the like. In some examples, the pretreatment layer 420 comprises a Ti-Zr-based conversion coating, a Cr-based conversion coating, or a copolymer-based coating, such as a poly(vinlyphosphonic acid-co acrylic acid) coating layer.

When passing through the rollers 405, a polymer film 425 can be pressed against the sheet metal substrate 410 to produce a laminated sheet metal substrate 430. In some cases, a single lamination system 400 can include additional sets of rollers to apply a second polymer film to an opposite side of the sheet metal substrate 410 from the polymer film 425. In some cases, the single pair of rollers 405 can additionally apply a second polymer film to an opposite side of the sheet metal substrate 410 from the polymer film 425. Although not shown in FIG. 4, polymer film 425 may optionally comprise a multilayer structure, such as a sealing polymeric layer and a top polymeric layer or an adhesive layer and a top polymeric layer, or sheet metal substrate may optionally comprise an adhesive layer thereon, such as over pretreatment layer 420, if present.

Turning back to FIG. 3, after lamination, the sheet metal substrate 305 with the multilayer polymeric insulation structure 326 thereon can pass into an annealing oven 335, which may be optional. In some cases, the annealing oven 335 is positioned immediately downstream of the lamination system 330, such that the sheet metal substrate 305 with the multilayer polymeric insulation structure 326 thereon exiting the lamination system 330 passes into the annealing oven 335 before passing or coming into contact with other machinery or systems. The annealing oven 335 may raise the temperature of the sheet metal substrate 305 with the multilayer polymeric insulation structure 326 thereon to an annealing temperature (T_{A}). The annealing temperature T_{A} may optionally be lower than the melting temperature (Tₘ) of the polymer film 325, or components thereof. Optionally, the annealing temperature T_{A} may be greater than or about equal to than the melting temperature (Tₘ) of the polymer film 325, or components thereof. In some embodiments, the annealing temperature T_{A} is from 175 °C to 275 °C, such as from 175 °C to 180 °C, from 180 °C to 185 °C, from 185 °C to 190 °C, from 190 °C to 195 °C, from 195 °C to 200 °C, from 200 °C to 205 °C, from 205 °C to 210 °C, from 210 °C to 215 °C, from 215 °C to 220 °C, from 220 °C to 225 °C, from 225 °C to 230 °C, from 230 °C to 235 °C, from 235 °C to 240 °C, from 240 °C to 245 °C, from 245 °C to 250 °C, from 250 °C to 255 °C, from 255 °C to 260 °C, from 260 °C to 265 °C, from 265 °C to 270 °C, or from 270 °C to 275 °C. In terms of lower limits, T_{A} may be greater than 175 °C, such as greater than 175 °C, greater than 180 °C, greater than 185 °C, greater than 190 °C, greater than 195 °C, or greater than 200 °C. In terms of upper limits, T_{A} may be less than 275 °C, e.g., less than 275 °C, less than 270 °C, less than 265 °C, less than 260 °C, less than 255 °C, less than 250 °C, less than 245 °C, less than 240 °C, less than 235 °C, less than 230 °C, or less than 225 °C.

The sheet metal substrate 305 with the multilayer polymeric insulation structure 326 thereon may spend a duration in the annealing oven 335 of sufficient length to impart the desired properties on the sheet metal substrate 305 with the multilayer polymeric insulation structure 326 thereon, including annealing of the sheet metal substrate 305 and achieving desired adhesion of the polymer film 325. The duration within the annealing oven 335 can be based on oven length and the speed of the sheet metal substrate, for example. In some cases, the duration can be within the range of approximately 2 seconds to approximately 30 seconds, approximately 9 seconds to approximately 15 seconds, approximately 10 seconds to approximately 14 seconds, or approximately 12 seconds. In some cases, the duration can be adjusted (e.g., by adjusting the sheet metal substrate speed) as necessary to compensate for changes in the temperature within the annealing oven 335. An expanded inset in FIG. 3 of laminated and annealed sheet metal substrate 340 shows the sheet metal substrate 305, pretreatment layer 306, and the multilayer polymeric insulation structure 326, including a joining layer 321 and a top polymer layer 322. In some examples, the joining layer 321 may be an adhesive layer, such as applied at adhesive application system 315 or present on the polymer film 325. In some examples, the joining layer 321 may be a polymer sealing layer or a low-melting polymer layer of the polymer film 325.

After exiting the annealing oven 335, laminated and annealed sheet metal substrate 340 may optionally be quenched, such as in air or a volume of quenching liquid (e.g., water) or by application of coolant to the laminated and annealed sheet metal substrate 340. The laminated and annealed sheet metal substrate 340 can be cooled immediately after exiting the annealing oven 335, through quenching or otherwise. In some cases or for some applications, laminated and annealed sheet metal substrate 340 can be optionally subjected to a lacquering process to apply an optional layer of lacquer to a second side of laminated and annealed sheet metal substrate 340.

After exiting from annealing oven, laminated and annealed sheet metal substrate 340 can be subjected to further processing. In some examples, laminated and annealed sheet metal substrate 340 can be coiled as is, such as for shipment or subsequent processing. Optionally, laminated and annealed sheet metal substrate 340 can be processed at a blanking or cutting system 345, to prepare electrically insulated sheet metal blanks or electrically insulated sheet metal strips or segments. Blanking or cutting system 345 can comprise any suitable system for cutting or blanking laminated and annealed sheet metal substrate 340 to create smaller electrically insulated sheet metal products, which can be subjected to further processing, in some examples. Although blanking or cutting system 345 is shown downstream of annealing oven 335, in some examples, blanking or cutting system 345 may be upstream of annealing oven 335 and blanked or cut laminated sheet metal products can be subjected to annealing at annealing oven 335.

Optionally, laminated and annealed sheet metal substrate 340 or smaller electrically insulated sheet metal products cut or blanked from laminated and annealed sheet metal substrate 340 can be subjected to forming, such as by any suitable forming system, such as including roll-forming equipment, stamping equipment, punching equipment, or the like. In some examples, multiple different types of forming equipment can be used, such as to prepare differently shaped electrically insulated sheet metal products. Blanking/cutting and forming, if used, can be performed in any desired order, such as where forming occurs first and blanking or cutting occurs second, or where blanking or cutting occurs first and forming occurs second. In some cases, one or both of blanking/cutting and forming are not used.

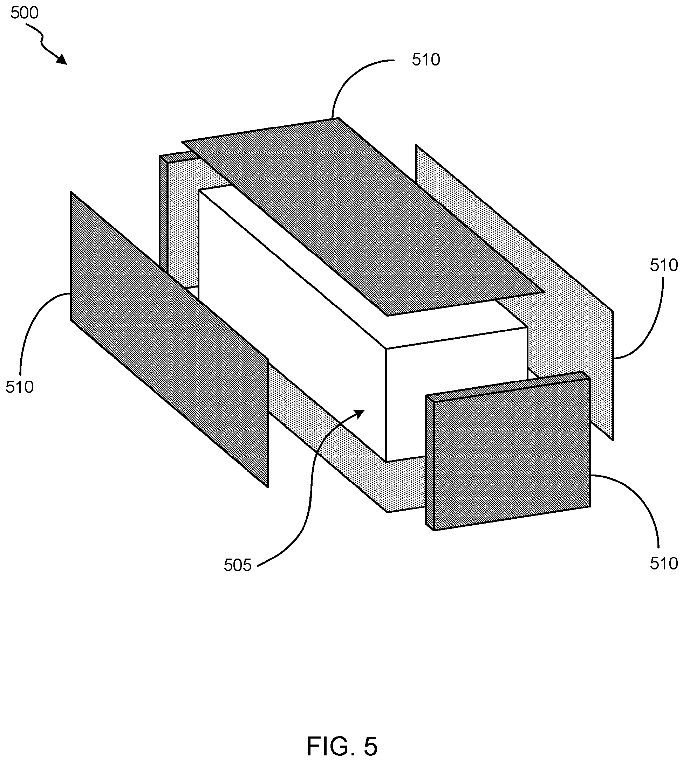

In some examples, electrically insulated sheet metal products can be assembled into or as part of a structural enclosure for a device. FIG. 5 shows an example structural enclosure 500 for a device 505 as an exploded view. Structural enclosure 500 is depicted as including a plurality of electrically insulated sheet metal products 510 (e.g., a bottom, a top, a front, a back, and two sides), surrounding device 505. Electrically insulated sheet metal products 510 can comprise any of the electrically insulated sheet metal products described herein and can include a sheet metal base layer and a multilayer polymeric insulation structure on an interior surface facing device 505.

The examples disclosed herein will serve to further illustrate aspects of the invention without, at the same time, however, constituting any limitation thereof. On the contrary, it is to be clearly understood that resort may be had to various embodiments, modifications and equivalents thereof which, after reading the description herein, may suggest themselves to those skilled in the art without departing from the spirit of the invention. The examples and embodiments described herein may also make use of conventional procedures, unless otherwise stated. Some of the procedures are described herein for illustrative purposes.

### EXAMPLE 1

Samples of various electrically insulated metal products were prepared by applying a polyethylene terephthalate (PET) film over an aluminum alloy sheet metal base to evaluate the electrical insulation performance and adhesion properties. Table 1 provides an overview of the different samples prepared.

**Table 1. *Samples 5-7 are not according to the invention.**

| Sample Number | Coating Thickness (µm) | Polymer Film Thickness (µm) | Adhesive Layer Thickness (µm) | Application Process |
|---|---|---|---|---|
| 1 | 63 | 25 | 38 | Pressure |
| 2 | 30 | 25 | 5 | Pressure + heat lamination |
| 3 | 55 | 50 | 5 | Pressure + heat lamination |
| 4 | 41 | 36 | 5 | Pressure + heat lamination |
| 5* | 30 | 30 | 0 | Pressure + heat lamination + annealing (210 °C) |
| 6* | 30 | 30 | 0 | Pressure + heat lamination + annealing (240 °C) |
| 7* | 30 | 30 | 0 | Pressure + heat lamination + annealing (240 °C) |

Samples (sample 1) included polymer films with adhesive layers pre-attached and applied directly on the aluminum alloy sheet metal base using application with pressure only or with pressure and heat. Three samples (samples 2-4) were prepared by applying a thin adhesive layer on the aluminum alloy sheet metal base and then laminating the polymer film over the adhesive layer with application of pressure and heat. Three samples (samples 5-7) were prepared by laminating a polymer film directly over the aluminum alloy sheet metal base using pressure and heat, followed by an annealing process in samples 5-7.

The samples were subjected to standard testing for electrical resistance (surface resistance and volume resistance, average of 10 samples), dielectric strength (breakdown resistance, average of 10 samples), and comparative tracking index (CTI) measurements (no failure after 50 drops on 5 samples). Table 2 summarizes the results obtained.

**Table 2. *Samples 5-7 are not according to the invention.**

| Sample | Surface Resistance (TΩ) | Volume Resistance (TΩ) | Dielectric Strength (kV) | CTI Value (V) |
|---|---|---|---|---|
| 1 | 34 | 5 | 26 | 225 |
| 2 | 92 | 48 | 16 | 200 |
| 3 | 304 | - | 28 | 225 |
| 4 | 303 | - | 11 | 200 |
| 5* | 60 | 42 | 33 | 200 |
| 6* | 91 | 40 | 16 | 200 |
| 7* | 330 | - | 13 | 200 |

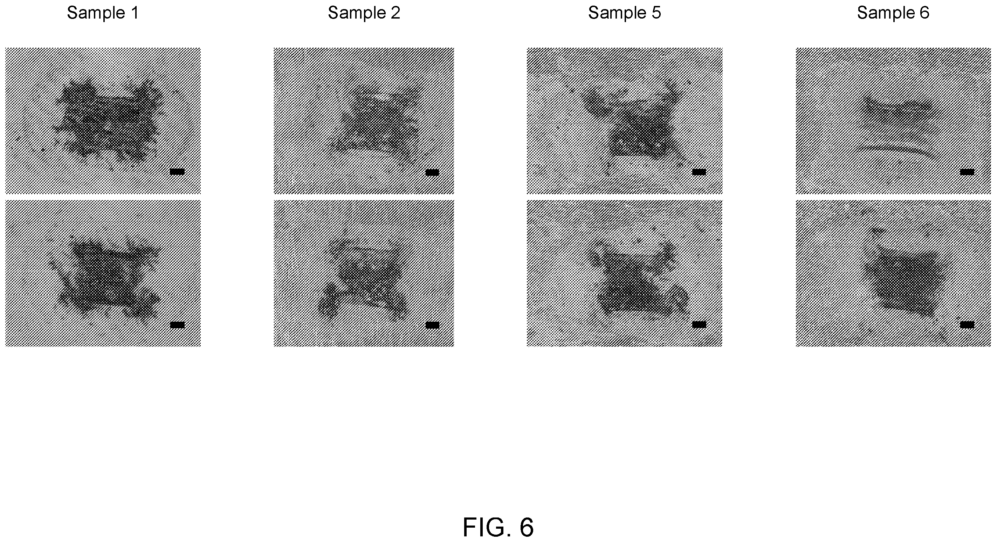

Where results were available, surface and volume resistance measurements showed very high resistance for all samples, indicating good electrical isolation achieved by the polymer films. Similarly, dielectric strength measurements indicated very high breakdown voltages, well in excess of 5 kV, again indicating good electrical isolation achieved by the polymer films. CTI values for all films were measured at around 200-250 V. FIG. 6 shows optical images of samples 1, 2, 5, and 6 after CTI testing, showing similar performance by all films. The black bars in the images in FIG. 6 represent about 1 mm. The samples laminated on a 200 µm aluminum substrate were also subjected to vertical flammability testing (UL94) and all samples received a V-0 flammability test rating.

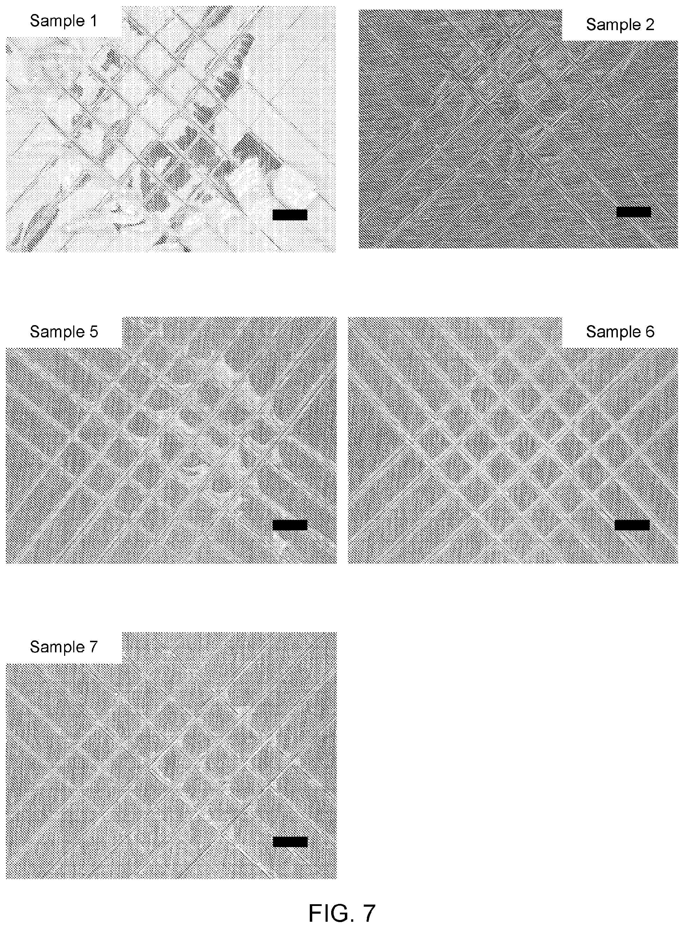

The samples were subjected to cross-cut testing to evaluate the adhesion performance of the polymer films on the aluminum alloy sheet metal substrate. Adhesion performance can be important to limit delamination of the polymer film during post-annealing and cool down processing. A series of cross cuts were applied at right angles to one another, spaced by approximately 1 mm, followed by adhesive tape testing to apply a delamination force to the polymer films to test delamination of the films from the aluminum substrate. FIG. 7 shows optical images of some of the samples after the cross-cut test. Significant peeling of the film from the substrate for sample 1 was observed, indicating poor adhesion. Less peeling of the film from the substrate for samples 2 and 3 was observed, indicating better adhesion. Little peeling of the film from the substrate for samples 6 and 7 were observed, indicating good adhesion.

## Claims

1. An electrically insulated metal product (100) comprising:
an aluminum alloy sheet metal substrate (105); and
a multilayer polymeric insulation structure (110) bonded to the aluminum alloy sheet metal substrate (105),
(i) wherein the multilayer polymeric insulation structure (110) comprises a joining layer (115) adjacent to the aluminum alloy sheet metal substrate (105) and a top polymer layer (120) over the joining layer (115), wherein the multilayer polymeric insulation structure (110) has a thickness of from 5 µm to 100 µm,
(ii) wherein the multilayer polymeric insulation structure (110) bonded to the aluminum alloy sheet metal substrate (105) together exhibit one or more of a surface resistance of from 1 x 10¹² Ω to 1 x 10¹⁵ Ω, a volume resistance of from 1 x 10¹² Ω to 1 x 10¹⁵ Ω, a breakdown voltage of from 2 kV to 50 kV, or a comparative tracking index value of from 175 V to 400 V, and
(iii) wherein the multilayer polymeric insulation structure (110) is free of pinholes or other defects providing a conductive pathway to the aluminum alloy sheet metal substrate (105).

2. The electrically insulated metal product (100) of claim 1, wherein the joining layer (115) comprises a first polyester film and wherein the top polymer layer (120) comprises a second polyester film having a different composition from the first polyester film.

3. The electrically insulated metal product (100) of claim 1 or 2, wherein the joining layer (115) comprises a polymeric sealing layer exhibiting a first melting temperature and wherein the top polymer layer (120) exhibits a second melting temperature or a decomposition temperature that is higher than the first melting temperature; and in particular
wherein the first melting temperature is from 150 °C to 250 °C or wherein the polymeric sealing layer is bonded to the aluminum alloy sheet metal substrate (105) after preheating to from 150 °C to 250 °C.

4. The electrically insulated metal product (100) of any one of claims 1-3, wherein the top polymer layer (120) comprises polyethylene, polypropylene, and/or polyethylene terephthalate.

5. The electrically insulated metal product (100) of any one of claims 1-4, wherein the multilayer polymeric insulation structure (110) is a laminated multilayer film, having been applied to the aluminum alloy sheet metal substrate (105) under lamination conditions including exposure to a lamination temperature of from 175 °C to 300 °C and/or exposure to a lamination pressure of from 1 bar to 7 bar; and/or
wherein the multilayer polymeric insulation structure (110) is an annealed multilayer film, having been subjected to annealing conditions of from 175 °C to 300 °C.

6. The electrically insulated metal product (100) of any one of claims 1-5, wherein no adhesive layer is positioned between the aluminum alloy sheet metal substrate (105) and the multilayer polymeric insulation structure (110).

7. The electrically insulated metal product (100) of any one of claims 1-5, wherein the joining layer (115) comprises an adhesive layer between the aluminum alloy sheet metal substrate (105) and the top polymer layer (120); and in particular
wherein:
the adhesive layer is disposed on the aluminum alloy sheet metal substrate (105) prior to bonding the aluminum alloy sheet metal substrate (105) to the top polymer layer (120); or
the adhesive layer is disposed on the top polymer layer (120) prior to bonding the aluminum alloy sheet metal substrate (105) to the top polymer layer (120).

8. The electrically insulated metal product (100) of any one of claims 1-7, wherein the aluminum alloy sheet metal substrate (105) comprises a surface pretreatment coating on an aluminum alloy sheet metal base layer; and in particular
wherein the surface pretreatment coating comprises a Ti-Zr-based conversion coating, a Cr-based conversion coating, or a copolymer-based coating; and/or
wherein the aluminum alloy sheet metal substrate (105) has a non-planar geometry or is in a formed configuration.

9. A method for preparing an electrically insulated metal product (100) according to claim 1, the method comprising:
pre-heating an aluminum alloy sheet metal substrate (105) to a first temperature of from 150 °C to 250 °C; and
bonding a multilayer polymeric insulation structure (110) to a surface of the aluminum alloy sheet metal substrate (105) to produce a bonded product, the multilayer polymeric insulation structure (110) comprising a joining layer (115) and a top polymer layer (120) over the joining layer (115), wherein the multilayer polymeric insulation structure (110) has a thickness of from 5 µm to 100 µm, and wherein the multilayer polymeric insulation structure (110) bonded to the aluminum alloy sheet metal substrate (105) together exhibit one or more of a surface resistance of from 1 x 10¹² Ω to 1 x 10¹⁵ Ω, a volume resistance of from 1 x 10¹² Ω to 1 x 10¹⁵ Ω, a breakdown voltage of from 2 kV to 50 kV, or a comparative tracking index value of from 175 V to 400 V.

10. The method of claim 9, wherein the joining layer (115) comprises a first polyester film and wherein the top polymer layer (120) comprises a second polyester film having a different composition from the first polyester film; and/or
wherein the joining layer (115) comprises a polymeric sealing layer exhibiting a first melting temperature and wherein the top polymer layer (120) exhibits a second melting temperature or a decomposition temperature that is higher than the first melting temperature; and in particular
wherein the first melting temperature is from 150 °C to 250 °C; and/or
wherein the top polymer layer (120) comprises polyethylene, polypropylene, and/or polyethylene terephthalate.

11. The method of claim 9 or 10, wherein bonding comprises subjecting the multilayer polymeric insulation structure (110) and the aluminum alloy sheet metal substrate (105) to lamination conditions including exposure to a lamination temperature of from 175 °C to 300 °C and/or exposure to a lamination pressure of from 1 bar to 7 bar; and/or
further comprising:
annealing the bonded product at an annealing temperature of from 175 °C to 300 °C; and/or
wherein the multilayer polymeric insulation structure (110) is bonded to the surface of the aluminum alloy sheet metal substrate (105) without use of an adhesive layer between the aluminum alloy sheet metal substrate (105) and the multilayer polymeric insulation structure (110); and/or
wherein no adhesive layer is positioned between the aluminum alloy sheet metal substrate (105) and the multilayer polymeric insulation structure (110).

12. The method of any one of claims 9-11, wherein the joining layer (115) comprises an adhesive layer between the aluminum alloy sheet metal substrate (105) and the top polymer layer (120); and in particular
wherein:
the adhesive layer is disposed on the aluminum alloy sheet metal substrate (105) prior to bonding the aluminum alloy sheet metal substrate (105) to the top polymer layer (120); or
the adhesive layer is disposed on the top polymer layer (120) prior to bonding the aluminum alloy sheet metal substrate (105) to the top polymer layer (120); and/or
wherein the aluminum alloy sheet metal substrate (105) comprises a surface pretreatment coating on an aluminum alloy sheet metal base layer; and in particular
wherein the surface pretreatment coating comprises a Ti-Zr-based conversion coating, a Cr-based conversion coating, or a copolymer-based coating; and/or
further comprising subjecting the bonded product to one or more forming processes to generate a formed product; and/or
wherein the bonded product is the electrically insulated metal product (100) of any of claims 1-8.

13. The electrically insulated metal product (100) of any of claims 1-8, prepared according to the method of any of claims 9-12.

14. A structural enclosure for a device, the structural enclosure comprising:
an electrically insulated metal product (100) according to claim 1, the electrically insulated metal product (100) comprising:
an aluminum alloy sheet metal substrate (105); and
a multilayer polymeric insulation structure (110) bonded to the aluminum alloy sheet metal substrate (105), wherein the multilayer polymeric insulation structure (110) comprises a joining layer (115) adjacent to the aluminum alloy sheet metal substrate (105) and a top polymer layer (120) over the joining layer (115), wherein the multilayer polymeric insulation structure (110) has a thickness of from 5 µm to 100 µm, and wherein the multilayer polymeric insulation structure (110) bonded to the aluminum alloy sheet metal substrate (105) together exhibit one or more of a surface resistance of from 1 x 10¹² Ω to 1 x 10¹⁵ Ω, a volume resistance of from 1 x 10¹² Ω to 1 x 10¹⁵ Ω, a breakdown voltage of from 2 kV to 50 kV, or a comparative tracking index value of from 175 V to 400 V and
comprising a plurality of electrically insulated metal products (100) mechanically joined to one another.

15. The structural enclosure of claim 14,
wherein the electrically insulated metal product (100) comprises the electrically insulated metal product (100) of any of claims 1-8; and/or
wherein the electrically insulated metal product (100) is prepared according to the method of any of claims 9-12.

## Patentansprüche

1. Elektrisch isoliertes Metallprodukt (100), umfassend:
ein Aluminiumlegierungs-Metallblechsubstrat (105); und
eine polymere Multischicht-Isolationsstruktur (110), welche an das Aluminiumlegierungs-Metallblechsubstrat (105) gebunden ist,
(i) wobei die polymere Multischicht-Isolationsstruktur (110) eine Verbindungsschicht (115), welche an das Aluminiumlegierungs-Metallblechsubstrat (105) angrenzt, und eine obere Polymerschicht (120) über der Verbindungsschicht (115) umfasst, wobei die polymere Multischicht-Isolationsstruktur (110) eine Dicke von 5 µm bis 100 µm aufweist,
(ii) wobei die polymere Multischicht-Isolationsstruktur (110), welche an das Aluminiumlegierungs-Metallblechsubstrat (105) gebunden ist, zusammen eines oder mehrere aus einem Oberflächenwiderstand von 1 x 10¹² Ω bis 1 x 10¹⁵ Ω, einem Volumenwiderstand von 1 x 10¹² Ω bis 1 x 10¹⁵ Ω, einer Durchschlagspannung von 2 kV bis 50 kV oder einem Comparative-Tracking-Index-Wert von 175 V bis 400 V aufweisen, und
(iii) wobei die polymere Multischicht-Isolationsstruktur (110) frei von Nadellöchern oder anderen Defekten ist, welche einen leitfähigen Pfad zu dem Aluminiumlegierungs-Metallblechsubstrat (105) bereitstellen.

2. Elektrisch isoliertes Metallprodukt (100) nach Anspruch 1, wobei die Verbindungsschicht (115) einen ersten Polyesterfilm umfasst und wobei die obere Polymerschicht (120) einen zweiten Polyesterfilm umfasst, welcher eine von dem ersten Polyesterfilm abweichende Zusammensetzung aufweist.

3. Elektrisch isoliertes Metallprodukt (100) nach Anspruch 1 oder 2, wobei die Verbindungsschicht (115) eine polymere Versiegelungsschicht umfasst, welche eine erste Schmelztemperatur aufweist, und wobei die obere Polymerschicht (120) eine zweite Schmelztemperatur oder eine Zersetzungstemperatur aufweist, welche höher ist als die erste Schmelztemperatur; und insbesondere
wobei die erste Schmelztemperatur von 150 °C bis 250 °C beträgt oder wobei die polymere Versiegelungsschicht nach Vorheizen auf 150 °C bis 250 °C an das Aluminiumlegierungs-Metallblechsubstrat (105) gebunden ist.

4. Elektrisch isoliertes Metallprodukt (100) nach einem der Ansprüche 1-3, wobei die obere Polymerschicht (120) Polyethylen, Polypropylen und/oder Polyethylenterephthalat umfasst.

5. Elektrisch isoliertes Metallprodukt (100) nach einem der Ansprüche 1-4, wobei die polymere Multischicht-Isolationsstruktur (110) ein laminierter Multischichtfilm ist, welcher unter Laminierungsbedingungen auf das Aluminiumlegierungs-Metallblechsubstrat (105) aufgebracht worden ist, umfassend ein Aussetzen einer Laminierungstemperatur von 175 °C bis 300 °C und/oder ein Aussetzen eines Laminierungsdrucks von 1 bar bis 7 bar; und/oder
wobei die polymere Multischicht-Isolationsstruktur (110) ein geglühter Multischichtfilm ist, welcher Glühbedingungen von 175 °C bis 300 °C unterzogen worden ist.

6. Elektrisch isoliertes Metallprodukt (100) nach einem der Ansprüche 1-5, wobei keine Klebstoffschicht zwischen dem Aluminiumlegierungs-Metallblechsubstrat (105) und der polymeren Multischicht-Isolationsstruktur (110) positioniert ist.

7. Elektrisch isoliertes Metallprodukt (100) nach einem der Ansprüche 1-5, wobei die Verbindungsschicht (115) eine Klebstoffschicht zwischen dem Aluminiumlegierungs-Metallblechsubstrat (105) und der oberen Polymerschicht (120) umfasst; und insbesondere
wobei:
die Klebstoffschicht auf dem Aluminiumlegierungs-Metallblechsubstrat (105) angeordnet ist,
bevor das Aluminiumlegierungs-Metallblechsubstrat (105) an die obere Polymerschicht (120) gebunden wird; oder
die Klebstoffschicht auf der oberen Polymerschicht (120) angeordnet ist, bevor das Aluminiumlegierungs-Metallblechsubstrat (105) an die obere Polymerschicht (120) gebunden wird.

8. Elektrisch isoliertes Metallprodukt (100) nach einem der Ansprüche 1-7, wobei das Aluminiumlegierungs-Metallblechsubstrat (105) eine Oberflächenvorbehandlungsbeschichtung auf einer Aluminiumlegierungs-Metallblechbasisschicht umfasst; und insbesondere
wobei die Oberflächenvorbehandlungsbeschichtung eine Ti-Zr-basierte Konversionsbeschichtung, eine Cr-basierte Konversionsbeschichtung oder eine Copolymerbasierte Beschichtung umfasst; und/oder
wobei das Aluminiumlegierungs-Metallblechsubstrat (105) eine nicht-planare Geometrie aufweist oder sich in einer umgeformten Konfiguration befindet.

9. Verfahren zur Herstellung eines elektrisch isolierten Metallprodukts (100) nach Anspruch 1,
wobei das Verfahren umfasst:
Vorheizen eines Aluminiumlegierungs-Metallblechsubstrats (105) auf eine erste Temperatur von 150 °C bis 250 °C; und
Binden einer polymeren Multischicht-Isolationsstruktur (110) an eine Oberfläche des Aluminiumlegierungs-Metallblechsubstrats (105), um ein gebundenes Produkt herzustellen, wobei die polymere Multischicht-Isolationsstruktur (110) eine Verbindungsschicht (115) und eine obere Polymerschicht (120) über der Verbindungsschicht (115) umfasst, wobei die polymere Multischicht-Isolationsstruktur (110) eine Dicke von 5 µm bis 100 µm aufweist, und wobei die polymere Multischicht-Isolationsstruktur (110), welche an das Aluminiumlegierungs-Metallblechsubstrat (105) gebunden ist, zusammen eines oder mehrere aus einem Oberflächenwiderstand von 1 x 10¹² Ω bis 1 x 10¹⁵ Ω, einem Volumenwiderstand von 1 x 10¹² Ω bis 1 x 10¹⁵ Ω, einer Durchschlagspannung von 2 kV bis 50 kV oder einem Comparative-Tracking-Index-Wert von 175 V bis 400 V aufweisen.

10. Verfahren nach Anspruch 9, wobei die Verbindungsschicht (115) einen ersten Polyesterfilm umfasst und wobei die obere Polymerschicht (120) einen zweiten Polyesterfilm umfasst, welcher eine von dem ersten Polyesterfilm abweichende Zusammensetzung aufweist; und/oder
wobei die Verbindungsschicht (115) eine polymere Versiegelungsschicht umfasst, welche eine erste Schmelztemperatur aufweist, und wobei die obere Polymerschicht (120) eine zweite Schmelztemperatur oder eine Zersetzungstemperatur aufweist, welche höher ist als die erste Schmelztemperatur; und insbesondere
wobei die erste Schmelztemperatur von 150 °C bis 250 °C beträgt; und/oder
wobei die obere Polymerschicht (120) Polyethylen, Polypropylen und/oder Polyethylenterephthalat umfasst.

11. Verfahren nach Anspruch 9 oder 10, wobei das Binden das Unterziehen der polymeren Multischicht-Isolationsstruktur (110) und des Aluminiumlegierungs-Metallblechsubstrats (105) unter Laminierungsbedingungen umfasst, umfassend ein Aussetzen einer Laminierungstemperatur von 175 °C bis 300 °C und/oder ein Aussetzen eines Laminierungsdrucks von 1 bar bis 7 bar; und/oder ferner umfassend:
Glühen des gebundenen Produkts bei einer Glühtemperatur von 175 °C bis 300 °C; und/oder
wobei die polymere Multischicht-Isolationsstruktur (110) ohne Verwendung einer Klebstoffschicht zwischen dem Aluminiumlegierungs-Metallblechsubstrat (105) und der polymeren Multischicht-Isolationsstruktur (110) an die Oberfläche des Aluminiumlegierungs-Metallblechsubstrats (105) gebunden wird; und/oder
wobei keine Klebstoffschicht zwischen dem Aluminiumlegierungs-Metallblechsubstrat (105) und der polymeren Multischicht-Isolationsstruktur (110) positioniert ist.

12. Verfahren nach einem der Ansprüche 9-11, wobei die Verbindungsschicht (115) eine Klebstoffschicht zwischen dem Aluminiumlegierungs-Metallblechsubstrat (105) und der oberen Polymerschicht (120) umfasst; und insbesondere
wobei:
die Klebstoffschicht auf dem Aluminiumlegierungs-Metallblechsubstrat (105) angeordnet wird, bevor das Aluminiumlegierungs-Metallblechsubstrat (105) an die obere Polymerschicht (120) gebunden wird; oder
die Klebstoffschicht auf der oberen Polymerschicht (120) angeordnet wird, bevor das Aluminiumlegierungs-Metallblechsubstrat (105) an die obere Polymerschicht (120) gebunden wird; und/oder
wobei das Aluminiumlegierungs-Metallblechsubstrat (105) eine Oberflächenvorbehandlungsbeschichtung auf einer Aluminiumlegierungs-Metallblechbasisschicht umfasst; und insbesondere
wobei die Oberflächenvorbehandlungsbeschichtung eine Ti-Zr-basierte Konversionsbeschichtung, eine Cr-basierte Konversionsbeschichtung oder eine Copolymerbasierte Beschichtung umfasst; und/oder
ferner umfassend ein Unterziehen des gebundenen Produkts unter einen oder mehrere Umformprozesse, um ein umgeformtes Produkt zu erzeugen; und/oder
wobei das gebundene Produkt das elektrisch isolierte Metallprodukt (100) nach einem der Ansprüche 1-8 ist.

13. Elektrisch isoliertes Metallprodukt (100) nach einem der Ansprüche 1-8, hergestellt nach dem Verfahren nach einem der Ansprüche 9-12.

14. Strukturgehäuse für eine Vorrichtung, wobei das Strukturgehäuse umfasst:
ein elektrisch isoliertes Metallprodukt (100) nach Anspruch 1, wobei das elektrisch isolierte Metallprodukt (100) umfasst:
ein Aluminiumlegierungs-Metallblechsubstrat (105); und
eine polymere Multischicht-Isolationsstruktur (110), welche an das Aluminiumlegierungs-Metallblechsubstrat (105) gebunden ist, wobei die polymere Multischicht-Isolationsstruktur (110) eine Verbindungsschicht (115), welche an das Aluminiumlegierungs-Metallblechsubstrat (105) angrenzt, und eine obere Polymerschicht (120) über der Verbindungsschicht (115) umfasst, wobei die polymere Multischicht-Isolationsstruktur (110) eine Dicke von 5 µm bis 100 µm aufweist, und wobei die polymere Multischicht-Isolationsstruktur (110), welche an das Aluminiumlegierungs-Metallblechsubstrat (105) gebunden ist, zusammen eines oder mehrere aus einem Oberflächenwiderstand von 1 x 10¹² Ω bis 1 x 10¹⁵ Ω, einem Volumenwiderstand von 1 x 10¹² Ω bis 1 x 10¹⁵ Ω, einer Durchschlagspannung von 2 kV bis 50 kV oder einem Comparative-Tracking-Index-Wert von 175 V bis 400 V aufweisen, und
umfassend eine Mehrzahl von elektrisch isolierten Metallprodukten (100), welche mechanisch miteinander verbunden sind.

15. Strukturgehäuse nach Anspruch 14,
wobei das elektrisch isolierte Metallprodukt (100) das elektrisch isolierte Metallprodukt (100) nach einem der Ansprüche 1-8 umfasst; und/oder
wobei das elektrisch isolierte Metallprodukt (100) nach dem Verfahren nach einem der Ansprüche 9-12 hergestellt ist.

## Revendications

1. Produit métallique électriquement isolé (100) comprenant:
un substrat métallique en tôle d'alliage d'aluminium (105); et
une structure d'isolation polymère multicouche (110) liée au substrat métallique en tôle d'alliage d'aluminium (105),
(i) dans lequel la structure d'isolation polymère multicouche (110) comprend une couche de jonction (115) adjacente au substrat métallique en tôle d'alliage d'aluminium (105) et une couche de polymère supérieure (120) sur la couche de jonction (115), dans lequel la structure d'isolation polymère multicouche (110) a une épaisseur de 5 µm à 100 µm,
(ii) dans lequel la structure d'isolation polymère multicouche (110) liée au substrat métallique en tôle d'alliage d'aluminium (105) présentent conjointement une ou plusieurs d'une résistance de surface de 1 x 10¹² Ω à 1 x 10¹⁵ Ω, d'une résistance volumique de 1 x 10¹² Ω à 1 x 10¹⁵ Ω, d'une tension de claquage de 2 kV à 50 kV, ou d'une valeur d'indice de résistance au cheminement comparatif de 175 V à 400 V, et
(iii) dans lequel la structure d'isolation polymère multicouche (110) est exempte de micropores ou d'autres défauts fournissant un chemin conducteur vers le substrat métallique en tôle d'alliage d'aluminium (105).

2. Produit métallique électriquement isolé (100) selon la revendication 1, dans lequel la couche de jonction (115) comprend un premier film de polyester et dans lequel la couche de polymère supérieure (120) comprend un second film de polyester ayant une composition différente de celle du premier film de polyester.

3. Produit métallique électriquement isolé (100) selon la revendication 1 ou 2, dans lequel la couche de jonction (115) comprend une couche de soudage polymère présentant une première température de fusion et dans lequel la couche de polymère supérieure (120) présente une seconde température de fusion ou une température de décomposition qui est supérieure à la première température de fusion; et en particulier
dans lequel la première température de fusion est de 150°C à 250°C ou dans lequel la couche de soudage polymère est liée au substrat métallique en tôle d'alliage d'aluminium (105) après un préchauffage à 150°C à 250°C.

4. Produit métallique électriquement isolé (100) selon l'une quelconque des revendications 1 à 3, dans lequel la couche de polymère supérieure (120) comprend du polyéthylène, du polypropylène et/ou du polyéthylène téréphtalate.

5. Produit métallique électriquement isolé (100) selon l'une quelconque des revendications 1 à 4, dans lequel la structure d'isolation polymère multicouche (110) est un film multicouche stratifié, ayant été appliqué sur le substrat métallique en tôle d'alliage d'aluminium (105) dans des conditions de stratification incluant une exposition à une température de stratification de 175°C à 300°C et/ou une exposition à une pression de stratification de 1 bar à 7 bars; et/ou
dans lequel la structure d'isolation polymère multicouche (110) est un film multicouche recuit, ayant été soumis à des conditions de recuit de 175°C à 300°C.

6. Produit métallique électriquement isolé (100) selon l'une quelconque des revendications 1 à 5, dans lequel aucune couche adhésive n'est positionnée entre le substrat métallique en tôle d'alliage d'aluminium (105) et la structure d'isolation polymère multicouche (110).

7. Produit métallique électriquement isolé (100) selon l'une quelconque des revendications 1 à 5, dans lequel la couche de jonction (115) comprend une couche adhésive entre le substrat métallique en tôle d'alliage d'aluminium (105) et la couche de polymère supérieure (120); et en particulier dans lequel:
la couche adhésive est disposée sur le substrat métallique en tôle d'alliage d'aluminium (105) avant la liaison du substrat métallique en tôle d'alliage d'aluminium (105) à la couche de polymère supérieure (120); ou
la couche adhésive est disposée sur la couche de polymère supérieure (120) avant la liaison du substrat métallique en tôle d'alliage d'aluminium (105) à la couche de polymère supérieure (120).

8. Produit métallique électriquement isolé (100) selon l'une quelconque des revendications 1 à 7, dans lequel le substrat métallique en tôle d'alliage d'aluminium (105) comprend un revêtement de prétraitement de surface sur une couche de base métallique en tôle d'alliage d'aluminium; et en particulier
dans lequel le revêtement de prétraitement de surface comprend un revêtement de conversion à base de Ti-Zr, un revêtement de conversion à base de Cr ou un revêtement à base de copolymère; et/ou
dans lequel le substrat métallique en tôle d'alliage d'aluminium (105) a une géométrie non plane ou est dans une configuration mise en forme.

9. Procédé de préparation d'un produit métallique électriquement isolé (100) selon la revendication 1,
le procédé comprenant:
le préchauffage d'un substrat métallique en tôle d'alliage d'aluminium (105) à une première température de 150°C à 250°C; et
la liaison d'une structure d'isolation polymère multicouche (110) à une surface du substrat métallique en tôle d'alliage d'aluminium (105) pour produire un produit lié, la structure d'isolation polymère multicouche (110) comprenant une couche de jonction (115) et une couche de polymère supérieure (120) sur la couche de jonction (115), dans lequel la structure d'isolation polymère multicouche (110) a une épaisseur de 5 µm à 100 µm, et dans lequel la structure d'isolation polymère multicouche (110) liée au substrat métallique en tôle d'alliage d'aluminium (105) présentent conjointement une ou plusieurs d'une résistance de surface de 1 x 10¹² Ω à 1 x 10¹⁵ Ω, d'une résistance volumique de 1 x 10¹² Ω à 1 x 10¹⁵ Ω, d'une tension de claquage de 2 kV à 50 kV, ou d'une valeur d'indice de résistance au cheminement comparatif de 175 V à 400 V.

10. Procédé selon la revendication 9, dans lequel la couche de jonction (115) comprend un premier film de polyester et dans lequel la couche de polymère supérieure (120) comprend un second film de polyester ayant une composition différente de celle du premier film de polyester; et/ou
dans lequel la couche de jonction (115) comprend une couche de soudage polymère présentant une première température de fusion et dans lequel la couche de polymère supérieure (120) présente une seconde température de fusion ou une température de décomposition qui est supérieure à la première température de fusion; et en particulier
dans lequel la première température de fusion est de 150°C à 250°C; et/ou
dans lequel la couche de polymère supérieure (120) comprend du polyéthylène, du polypropylène et/ou du polyéthylène téréphtalate.

11. Procédé selon la revendication 9 ou 10, dans lequel la liaison comprend l'exposition de la structure d'isolation polymère multicouche (110) et du substrat métallique en tôle d'alliage d'aluminium (105) à des conditions de stratification incluant une exposition à une température de stratification de 175°C à 300°C et/ou une exposition à une pression de stratification de 1 bar à 7 bars; et/ou
comprenant en outre:
le recuit du produit lié à une température de recuit de 175°C à 300°C; et/ou
dans lequel la structure d'isolation polymère multicouche (110) est liée à la surface du substrat métallique en tôle d'alliage d'aluminium (105) sans utilisation de couche adhésive entre le substrat métallique en tôle d'alliage d'aluminium (105) et la structure d'isolation polymère multicouche (110); et/ou
dans lequel aucune couche adhésive n'est positionnée entre le substrat métallique en tôle d'alliage d'aluminium (105) et la structure d'isolation polymère multicouche (110).

12. Procédé selon l'une quelconque des revendications 9 à 11, dans lequel la couche de jonction (115) comprend une couche adhésive entre le substrat métallique en tôle d'alliage d'aluminium (105) et la couche de polymère supérieure (120); et en particulier
dans lequel:
la couche adhésive est disposée sur le substrat métallique en tôle d'alliage d'aluminium (105) avant la liaison du substrat métallique en tôle d'alliage d'aluminium (105) à la couche de polymère supérieure (120); ou
la couche adhésive est disposée sur la couche de polymère supérieure (120) avant la liaison du substrat métallique en tôle d'alliage d'aluminium (105) à la couche de polymère supérieure (120); et/ou
dans lequel le substrat métallique en tôle d'alliage d'aluminium (105) comprend un revêtement de prétraitement de surface sur une couche de base métallique en tôle d'alliage d'aluminium; et en particulier
dans lequel le revêtement de prétraitement de surface comprend un revêtement de conversion à base de Ti-Zr, un revêtement de conversion à base de Cr ou un revêtement à base de copolymère; et/ou
comprenant en outre l'exposition du produit lié à un ou plusieurs traitements de formage pour produire un produit formé; et/ou
dans lequel le produit lié est le produit métallique électriquement isolé (100) selon l'une quelconque des revendications 1 à 8.

13. Produit métallique électriquement isolé (100) selon l'une quelconque des revendications 1 à 8, préparé selon le procédé selon l'une quelconque des revendications 9 à 12.

14. Enceinte structurelle pour un dispositif, l'enceinte structurelle comprenant:
un produit métallique électriquement isolé (100) selon la revendication 1, le produit métallique électriquement isolé (100) comprenant:
un substrat métallique en tôle d'alliage d'aluminium (105); et
une structure d'isolation polymère multicouche (110) liée au substrat métallique en tôle d'alliage d'aluminium (105), dans laquelle la structure d'isolation polymère multicouche (110) comprend une couche de jonction (115) adjacente au substrat métallique en tôle d'alliage d'aluminium (105) et une couche de polymère supérieure (120) sur la couche de jonction (115), dans laquelle la structure d'isolation polymère multicouche (110) a une épaisseur de 5 µm à 100 µm, et dans laquelle la structure d'isolation polymère multicouche (110) liée au substrat métallique en tôle d'alliage d'aluminium (105) présentent conjointement une ou plusieurs d'une résistance de surface de 1 x 10¹² Ω à 1 x 10¹⁵ Ω, d'une résistance volumique de 1 x 10¹² Ω à 1 x 10¹⁵ Ω, d'une tension de claquage de 2 kV à 50 kV, ou d'une valeur d'indice de résistance au cheminement comparatif de 175 V à 400 V et
comprenant une pluralité de produits métalliques électriquement isolés (100) joints mécaniquement les uns aux autres.

15. Enceinte structurelle selon la revendication 14,
dans laquelle le produit métallique électriquement isolé (100) comprend le produit métallique électriquement isolé (100) selon l'une quelconque des revendications 1 à 8; et/ou
dans laquelle le produit métallique électriquement isolé (100) est préparé selon le procédé selon l'une quelconque des revendications 9 à 12.
